# EUROPÄISCHE PATENTSCHRIFT

(11) **EP 3 393 909 B1**
(45) Veröffentlichungstag und Bekanntmachung des Hinweises auf die Patenterteilung: **12.10.2022**
(21) Anmeldenummer: 16819847.1
(22) Anmeldetag: 14.12.2016
(51) Int. Cl.: B64D 11/06, B60N 2/10, B60N 2/68

(54) **FLUGZEUGSITZVORRICHTUNG**
AIRCRAFT SEAT DEVICE
DISPOSITIF FORMANT SIÈGE D'AVION

(30) Priorität: 23.12.2015 DE 102015122830
(43) Veröffentlichungstag der Anmeldung: 31.10.2018
(73) Patentinhaber: Recaro Aircraft Seating GmbH & Co. KG, 74523 Schwäbisch Hall (DE)
(72) Erfinder: STACHEL, Alfons, 74538 Rosengarten (DE); STEINMEYER, Klaus, 74538 Rosengarten (DE); JUSSLI, Zoltan, 74626 Bretzfeld (DE)
(74) Vertreter: Daub, Thomas
(86) Internationale Anmeldenummer: PCT/EP2016/081030
(87) Internationale Veröffentlichungsnummer: WO 2017/108537

(56) Entgegenhaltungen:
- GB-A- 2 437 164
- US-A- 3 224 808
- US-A1- 2011 148 167
- US-A1- 2012 139 302
- US-B1- 6 402 244

## Beschreibung

### Stand der Technik

Die Erfindung betrifft einen Flugzeugsitz mit einer Armlehne und mit einer Flugzeugsitzvorrichtung nach dem Oberbegriff des Patentanspruchs 1.

Es sind bereits Flugzeugsitze vorgeschlagen worden.

Die Aufgabe der Erfindung besteht insbesondere darin, einen gattungsgemäßen Flugzeugsitz mit verbesserten Eigenschaften hinsichtlich eines Gewichts und eines Komforts bereitzustellen. Die Aufgabe wird erfindungsgemäß durch die Merkmale des

Patentanspruchs 1 gelöst, während vorteilhafte Ausgestaltungen und Weiterbildungen der Erfindung den Unteransprüchen entnommen werden können.

Die Dokumente US 2012/139302 A1, US 6 402 244 B1, US 2011/148167 A1 und US 3 224 808 A zeigen bekannt Flugzeugsitze. GB 2 437 164 A zeigt einen gattungsgemäßen Flugzeugsitz.

### Vorteile der Erfindung

Die Erfindung ist in Anspruch 1 definiert. Vorteilhafte Ausgestaltungen sind in den Unteransprüchen beschrieben. Die folgenden Absätze nennen Vorschläge welche für das Verständnis der Erfindung sinnvoll erscheinen, der Gegenstand und Schutzumfang der Erfindung wird jedoch allein durch die Ansprüche definiert.

Erfindungsgemäß wird ein Flugzeugsitz mit unter Anderem, einer Flugzeugsitzvorrichtung mit zumindest einer Sitzbodeneinheit, die zumindest teilweise eine Sitzfläche ausbildet, mit einer Aufständereinheit, die dazu vorgesehen ist, auf einer Aufständerebene aufgeständert zu werden, und mit zumindest einem Trägerelement, welches sich zumindest über einen Großteil einer Sitztiefe der Sitzfläche erstreckt und dazu vorgesehen ist, die Sitzbodeneinheit mit der Aufständereinheit zu koppeln, vorgeschlagen. Unter einer "Flugzeugsitzvorrichtung" soll dabei insbesondere eine Vorrichtung verstanden werden, die wenigstens einen Teil oder einen gesamten Flugzeugsitz ausbildet. Unter einem "Flugzeugsitz" soll dabei insbesondere ein Sitz verstanden werden, der in einer Flugzeugkabine eines Flugzeugs aufgeständert ist. Ein Flugzeugsitz weist dabei vorzugsweise zumindest eine Sitzbodeneinheit, eine Rückenlehneneinheit, eine Aufständereinheit und/oder zumindest eine Armlehneneinheit auf. Dabei ist der Flugzeugsitz vorzugsweise als Teil von mehreren nebeneinander angeordneten Flugzeugsitzen ausgebildet. Unter einer "Sitzbodeneinheit" soll dabei insbesondere eine Einheit verstanden werden, die den Sitzbereich für einen Passagier ausbildet, wobei die Sitzbodeneinheit dabei vorzugsweise von einem Grundkörper und einem auf dem Grundkörper angebrachten Polster gebildet ist. Unter einem "Sitzbereich" soll dabei insbesondere ein Bereich des Sitzes verstanden werden, der dazu vorgesehen ist, dass ein Passagier, insbesondere während eines Transports, beispielsweise während eines Flugs, darauf sitzt. Der Grundkörper der Sitzbodeneinheit ist dabei vorzugsweise aus einem Faserverbundwerkstoff hergestellt. Unter einer "Aufständereinheit" soll dabei insbesondere eine Einheit verstanden werden, mittels der ein Flugzeugsitz auf einer Aufständerebene der Flugzeugkabine aufgeständert ist. Die Aufständereinheit weist dabei vorzugsweise zumindest einen vorderen Sitzfuß, einen hinteren Sitzfuß sowie mit den Sitzfüßen gekoppelte Querträger auf, die in einer Querrichtung des Flugzeugsitzes verlaufen. Grundsätzlich ist es dabei auch denkbar, dass die Aufständereinheit lediglich einen einzelnen Querträger aufweist. Unter einem "Trägerelement" soll dabei insbesondere ein Element verstanden werden, über das Kräfte aus der Sitzbodeneinheit und/oder der Rückenlehneneinheit in die Aufständereinheit des Flugzeugsitzes abgeleitet werden können. Dabei ist ein Trägerelement insbesondere aus einem steifen Material gebildet und ist dabei sowohl mit einem vorderen Querträger als auch einem hinteren Querträger der Aufständereinheit gekoppelt. Dabei ist das Trägerelement vorzugsweise drehfest und axial fixiert mit den Querträgern verbunden. Dazu ist das wenigstens eine Trägerelement über eine Form- und/oder Kraftschlussverbindung fest mit den Querträgern verbindbar. Grundsätzlich ist es auch denkbar, dass das zumindest eine Trägerelement stoffschlüssig mit den Querträgern verbunden ist. Vorzugsweise weist ein Flugzeugsitz zwei Trägerelemente auf, über die die Sitzbodeneinheit des Flugzeugsitzes mit der Aufständereinheit gekoppelt ist. Ist der Flugzeugsitz als Teil einer Sitzreihe mit mehreren Flugzeugsitzen ausgebildet, ist es vorteilhaft denkbar, dass ein Trägerelement, das zwischen zwei benachbarten Flugzeugsitzen angeordnet ist, zur Anbindung zumindest der Sitzbodeneinheiten beider Flugzeugsitze vorgesehen ist. Unter einer "Sitztiefe der Sitzfläche" soll dabei insbesondere eine Erstreckung der Sitzbodeneinheit in einer Sitzrichtung der Sitzbodeneinheit verstanden werden. Die Sitztiefe ist dabei von einem vorderen Ende der Sitzbodeneinheit, die ein vorderes Ende des Flugzeugsitzes ausbildet, bis an ein hinteres Ende, an dem die Sitzbodeneinheit mit der Rückenlehneneinheit gekoppelt ist, gemessen. Unter einem "Großteil der Sitztiefe" soll dabei insbesondere zumindest über 50% der gesamten Sitztiefe, vorzugsweise zumindest 75% der gesamten Sitztiefe und in einer besonders vorteilhaften Ausgestaltung mehr als 90% der gesamten Sitztiefe verstanden werden. Unter einer "Rückenlehneneinheit" soll dabei insbesondere eine Einheit des Flugzeugsitzes verstanden werden, die eine Rückenlehnenauflagefläche ausbildet, an der ein auf dem Flugzeugsitz sitzender Passagier seinen Rücken anlehnen kann. Dabei umfasst die Rückenlehneneinheit vorzugsweise zumindest einen Grundkörper und ein Polsterelement, welches die Rückenlehnenauflagefläche ausbildet. Die Rückenlehneneinheit ist dabei an einem hinteren Ende einer Sitzbodeneinheit angeordnet und erstreckt sich von der Sitzbodeneinheit nach oben, von einer Aufständereinheit weg. Der Grundkörper der Rückenlehneneinheit ist dabei vorzugsweise aus einem Faserverbundwerkstoff gebildet. Dabei ist es denkbar, dass der Grundkörper der Rückenlehneneinheit und der Grundkörper der Sitzbodeneinheit einstückig miteinander ausgebildet sind. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft ein Flugzeugsitz bereitgestellt werden, der besonders leicht und kostengünstig hergestellt werden kann.

Weiter wird vorgeschlagen, dass das wenigstens eine Trägerelement in wenigstens einer Sitzposition zumindest im Wesentlichen unterhalb einer Oberkante der Sitzbodeneinheit angeordnet ist. Unter einer "Sitzposition" soll dabei insbesondere eine Stellung des Flugzeugsitzes verstanden werden, in der der Flugzeugsitz voll montiert ist und ein Passagier auf der Sitzbodeneinheit des Flugzeugsitzes sitzen kann. Unter einer "Oberkante der Sitzbodeneinheit" soll dabei insbesondere eine Kante der Sitzbodeneinheit verstanden werden, die einen größten Abstand von einer Aufständerebene aufweist, auf der der Flugzeugsitz, dessen Teil die Sitzbodeneinheit ist, aufgeständert ist. Dabei soll unter einer Oberkante der Sitzbodeneinheit insbesondere eine vordere Kante der Sitzbodeneinheit, insbesondere eines Sitzpolsters, verstanden werden. Dabei ist die Trägereinheit insbesondere in einer TTL-Position des Flugzeugsitzes unterhalb der Oberkante der Sitzbodeneinheit angeordnet. Dadurch kann der Flugzeugsitz besonders vorteilhaft kompakt ausgebildet werden.

Weiter wird vorgeschlagen, dass die Flugzeugsitzvorrichtung eine Rückenlehneneinheit aufweist, die zumindest teilweise einstückig mit der Sitzbodeneinheit ausgebildet ist. Unter "zumindest teilweise einstückig" soll dabei insbesondere verstanden werden, dass zumindest Teile der Rückenlehneneinheit und der Sitzbodeneinheit aus einem gleichen Bauteil gebildet sind und insbesondere zusammen aus zumindest einer Faserverbundlage gebildet sind. Dadurch kann eine besonders vorteilhafte Sitzvorrichtung bereitgestellt werden.

Ferner wird vorgeschlagen, dass das wenigstens eine Trägerelement in wenigstens einer Sitzposition von der Sitzbodeneinheit nach oben abgedeckt ist. Unter "nach oben abgedeckt" soll dabei insbesondere verstanden werden, dass die Trägerelemente direkt unterhalb der Sitzbodeneinheit angeordnet sind und nicht seitlich über die Sitzbodeneinheit hinausragen. Dadurch kann das wenigstens eine Trägerelement vorteilhaft platzsparend an dem Flugzeugsitz untergebracht werden.

Es wird weiterhin vorgeschlagen, dass die Sitzbodeneinheit und/oder eine Rückenlehneneinheit dazu vorgesehen sind, schwenkbar mit der Aufständereinheit verbunden zu sein. Dabei sind die Sitzbodeneinheit und die Rückenlehneneinheit um einen gemeinsamen Drehpunkt gelagert. Unter "schwenkbar mit der Aufständereinheit verbunden" soll dabei insbesondere verstanden werden, dass Elemente, wie insbesondere die Sitzbodeneinheit und/oder die Rückenlehneneinheit, zumindest zu einem Teil der Aufständereinheit schwenkbar gelagert sind. Unter "schwenkbar gelagert" soll dabei insbesondere um eine Schwenkachse um einen definierten Schwenkwinkel zueinander rotierbar gelagert verstanden werden. Dadurch kann vorteilhaft einfach ein Recline für den Flugzeugsitz bereitgestellt werden.

Des Weiteren wird vorgeschlagen, dass die Sitzbodeneinheit und/oder eine Rückenlehneneinheit dazu vorgesehen sind, an dem wenigstens einen Trägerelement schwenkbar gelagert zu sein. Unter "an dem Trägerelement schwenkbar gelagert" soll dabei insbesondere verstanden werden, dass die Sitzbodeneinheit und/oder die Rückenlehneneinheit über ein geeignetes Lagermodul direkt mit dem zumindest einen Trägerelement verbunden werden. Dadurch kann die Sitzbodeneinheit und/oder die Rückenlehneneinheit für eine Bereitstellung einer Reclinefunktion des Flugzeugsitzes besonders einfach ausgeführt werden.

Außerdem wird vorgeschlagen, dass die Flugzeugsitzvorrichtung wenigstens ein Lagermodul aufweist, das dazu vorgesehen ist, die Sitzbodeneinheit und/oder die Rückenlehneneinheit zu den Sitzteilern zu verschwenken und dazu eine Schwenkachse ausbildet, die unterhalb der Sitzbodeneinheit angeordnet ist. Unter einem "Lagermodul" soll dabei insbesondere ein Modul verstanden werden, über das zumindest zwei Elemente, wie insbesondere die Sitzbodeneinheit und/oder die Rückenlehneneinheit, zu dem wenigstens einen Lagermodul beweglich, insbesondere verschwenkbar lagern. Dabei ist das Lagermodul vorzugsweise als ein Gleitlager ausgebildet. Grundsätzlich ist es auch denkbar, dass das Lagermodul ein oder mehrere Wälzlager aufweist, über die die Elemente schwenkbar zueinander ausgebildet sind. Grundsätzlich ist es ebenso denkbar, dass die Sitzbodeneinheit und/oder die Rückenlehneneinheit über einen fixierten biegesteifen, aber drehweichen Torsionsstab schwenkbar gelagert sind, wobei der Torsionsstab durch ein Verwinden die Verschwenkung bewirkt. Dadurch kann die Reclinefunktion des Flugzeugsitzes besonders vorteilhaft ausgestaltet werden.

Es wird weiter vorgeschlagen, dass die Schwenkachse des Lagermoduls, koaxial zu einer Querrichtung der Aufständereinheit ausgerichtet ist. Unter einer "Schwenkachse des Lagermoduls" soll dabei insbesondere eine Achse verstanden werden, um die die über das Lagermodul zueinander schwenkbar gelagerten Elemente, wie insbesondere das wenigstens eine Trägerelement und die Sitzbodeneinheit und/oder die Rückenlehneneinheit, zueinander schwenkbar sind. Unter einer Querrichtung der Aufständereinheit soll dabei insbesondere eine Richtung verstanden werden, die parallel zu den Querträgern der Aufständereinheit verläuft. Die Querrichtung ist dabei vorzugsweise orthogonal sowohl zu der Sitzrichtung, als auch zu einer senkrecht auf der Aufständerebene stehenden Vertikalrichtung ausgerichtet. Dadurch kann das Lagermodul besonders vorteilhaft ausgebildet werden.

Zudem wird vorgeschlagen, dass das Lagermodul zumindest ein Torsionselement aufweist, das die Schwenkachse des Sitzes ausbildet und sich über eine Sitzbreite der Sitzbodeneinheit erstreckt. Unter einem "Torsionselement" soll dabei insbesondere ein Element verstanden werden, das dazu vorgesehen ist, Torsionsmomente weiterzuleiten, um insbesondere eine Bewegung von einem einen Ende an ein anderes Ende zu übertragen. Dabei ist das Torsionselement vorzugsweise als ein Torsionsrohr oder ein Torsionselement ausgebildet. Unter einem "Torsionsstab" soll dabei insbesondere ein biegesteifer, aber verdrehweicher Stab verstanden werden, der dazu vorgesehen ist, bei einer Torsionsbelastung zumindest um einen gewissen Winkel elastisch verwunden zu werden. Unter einem "Torsionsrohr" soll dabei ein im Wesentlichen torsionssteifes Rohr verstanden werden, das sich bei einer Torsionsbelastung im Wesentlichen nicht verwindet und ein Torsionsmoment im Wesentlichen ungemindert weitergibt. Dadurch kann das Lagermodul besonders vorteilhaft ausgestaltet werden.

Weiter wird vorgeschlagen, dass die Flugzeugsitzvorrichtung zumindest ein Verriegelungsmodul aufweist, welches zumindest in einer Sitzstellung dazu vorgesehen ist, die Sitzbodeneinheit und/oder Rückenlehneneinheit zu verriegeln. Unter einem "Verriegelungsmodul" soll dabei insbesondere ein Modul verstanden werden, das zwei Elemente zumindest in einem Betriebszustand zueinander fixiert. Dabei ist das Verriegelungsmodul insbesondere dazu vorgesehen, die Sitzbodeneinheit und/oder die Rückenlehneneinheit in zumindest einer Sitzstellung zu der Aufständereinheit zu fixieren. Dadurch kann die Sitzbodeneinheit und/oder die Rückenlehneneinheit in zumindest einer Sitzstellung fixiert werden. Unter "verriegeln" soll dabei insbesondere in einer Position fest fixieren verstanden werden. Unter einer Sitzstellung soll dabei insbesondere eine Ausrichtung der Sitzbodeneinheit und/oder der Rückenlehneneinheit zu der Aufständerebene verstanden werden. Dabei weist der Flugzeugsitz zumindest eine als TTL-Position und eine als Komfortposition ausgebildete Sitzstellung auf. Die TTL-Position ist dabei als eine Stellung des Flugzeugsitzes ausgebildet, die in einer Start-, Lande- und Turbulenzphase eines Flugs eingenommen werden muss. Die TTL-Position ist als eine Taxi-, Takeoff- oder Landing-Position ausgebildet. Dabei ist die TTL-Position als eine aufrechte Sitzstellung ausgebildet, in der der Sitzbereich der Sitzbodeneinheit im Wesentlichen parallel zu der Aufständerebene und die Rückenlehnenfläche der Rückenlehneneinheit im Wesentlichen orthogonal zu der Aufständerebene ausgerichtet ist. Dadurch kann der Flugzeugsitz in zumindest einer Sitzstellung vorteilhaft verriegelt werden.

Ferner wird vorgeschlagen, dass das Verriegelungsmodul wenigstens ein Verriegelungselement aufweist, das die Sitzbodeneinheit lediglich in einer als TTL-Position ausgebildeten Sitzstellung verriegelt. Dadurch kann ein vorteilhaft einfaches Verriegelungsmodul bereitgestellt werden und der Flugzeugsitz insbesondere in der TTL-Position vorteilhaft gesichert werden.

Es wird weiterhin vorgeschlagen, dass die Flugzeugsitzvorrichtung ein Lagermodul aufweist, das das wenigstens eine Trägerelement direkt mit einem hinteren Querträger schwenkbar koppelt. Unter "direkt koppeln" soll dabei insbesondere verstanden werden, dass eine Lagerung des Trägerelements unmittelbar auf dem Querträger erfolgt. Dadurch kann eine vorteilhaft einfache Flugzeugsitzvorrichtung erreicht werden.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung in einem ersten Ausführungsbeispiel mit einer Sitzreihe,
- Fig. 2: eine schematische Seitenansicht der erfindungsgemäßen Flugzeugsitzvorrichtung mit einem Flugzeugsitz in einer TTL-Position und einer angedeuteten Komfortposition,
- Fig. 3: eine Detailansicht der Flugzeugsitzvorrichtung, insbesondere eines Trägerelements und einer Sitzbodeneinheit,
- Fig. 4: eine Detailansicht einer Verriegelungseinheit,
- Fig. 5: eine schematische Schnittansicht durch eine Sitzbodeneinheit,
- Fig. 6: eine schematische Darstellung einer Sitzbodeneinheit und einer Rückenlehneneinheit mit möglichen Schwenkpunkten,
- Fig. 7: eine schematische Darstellung einer erfindungsgemäßen Flugzeugsitzvorrichtung in einem zweiten Ausführungsbeispiel,
- Fig. 8: eine schematische Darstellung der Sitzbodeneinheit und Teilen einer Aufständereinheit von unten,
- Fig. 9: eine schematische Darstellung der Flugzeugsitzvorrichtung im zweiten Ausführungsbeispiel mit einer Sitzreihe mit drei Flugzeugsitzen,
- Fig. 10: eine schematische Darstellung einer erfindungsgemäßen Flugzeugsitzvorrichtung in einem dritten Ausführungsbeispiel,
- Fig. 11: eine schematische Darstellung eines Teils einer Aufständereinheit und eines Trägerelements,
- Fig. 12: eine stark schematisierte Schnittdarstellung einer Flugzeugsitzvorrichtung in einem vierten Ausführungsbeispiel mit einer Sitzbodeneinheit und einem als Torsionsstab ausgebildeten Torsionselement und
- Fig. 13: eine schematische Darstellung einer erfindungsgemäßen Flugzeugsitzvorrichtung in einem fünften Ausführungsbeispiel.

### Beschreibung der Ausführungsbeispiele

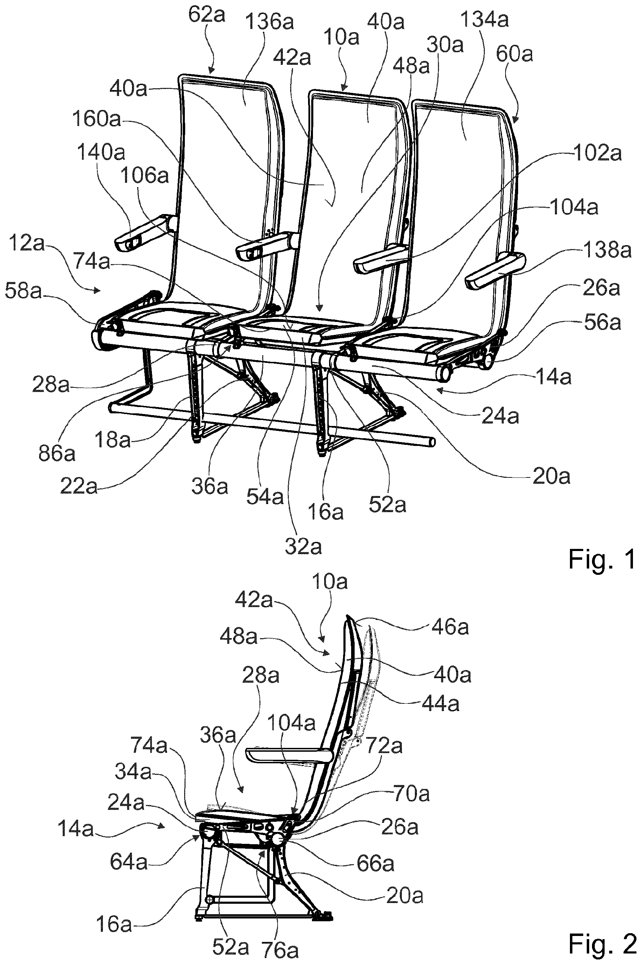

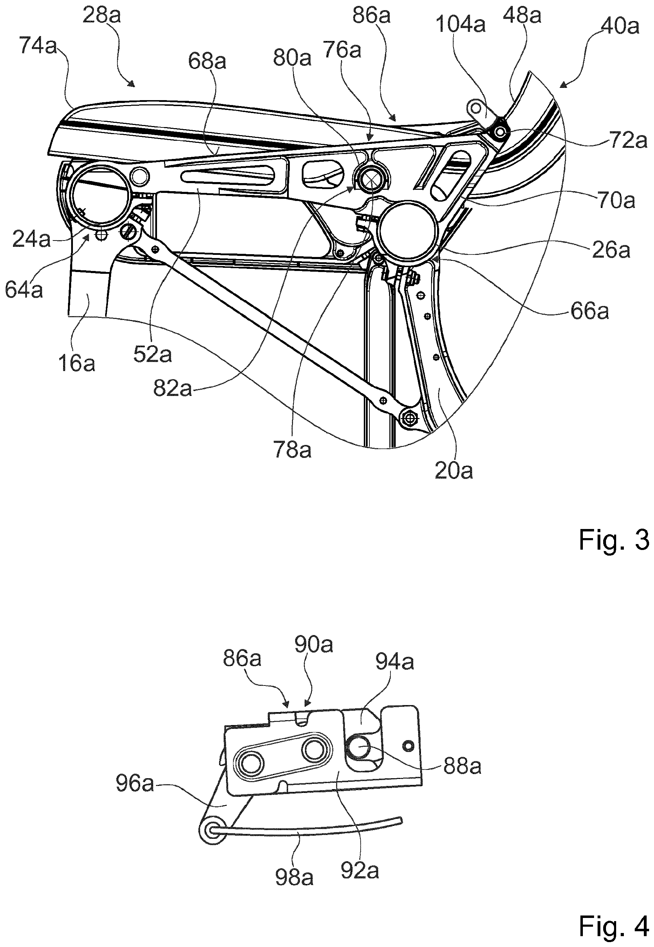

Die Figuren 1 bis 6 zeigen ein erstes Ausführungsbeispiel eines erfindungsgemäßen Flugzeugsitzes.

Die Flugzeugsitzvorrichtung ist Teil eines Flugzeugsitzes 10a. Der Flugzeugsitz 10a ist dazu vorgesehen, in einer Flugzeugkabine eines Flugzeugs aufgeständert zu werden. Ein Kabinenboden der Flugzeugkabine bildet dabei eine Aufständerebene aus, auf der der Flugzeugsitz 10a aufgeständert ist. Der Flugzeugsitz 10a ist dabei Teil einer Sitzreihe 12a aus mehreren Flugzeugsitzen 10a, 60a, 62a. Die Sitzreihe 12a weist drei nebeneinander angeordnete Flugzeugsitze 10a, 60a, 62a auf. Grundsätzlich ist es auch denkbar, dass die Sitzreihe 12a eine andere Anzahl an Flugzeugsitzen 10a, 60a, 62a aufweist. In der Flugzeugkabine sind mehrere, nicht näher dargestellte Sitzreihen mit der erfindungsgemäßen Flugzeugsitzvorrichtung angeordnet. Die weiteren Sitzreihen sind dabei in einem nicht näher dargestellten und beschriebenen Layout in der Passagierkabine angeordnet, vorzugsweise aber parallel hintereinander. Der Flugzeugsitz 10a umfasst eine Aufständereinheit 14a. Die Aufständereinheit 14a ist dazu vorgesehen, den Flugzeugsitz 10a auf dem Kabinenboden der Flugzeugkabine aufzuständern. Die Aufständereinheit 14a umfasst zwei vordere Sitzfüße 16a, 18a sowie zwei hintere Sitzfüße 20a, 22a. Die Sitzfüße 16a, 18a, 20a, 22a sind an ihrem unteren Ende jeweils über nicht näher dargestellte Anbindungselemente fest mit nicht näher dargestellten Führungsschienen der Flugzeugkabine gekoppelt. Die Führungsschienen sind dabei vorzugsweise in den Kabinenboden eingelassen. Die Aufständereinheit 14a weist zwei Querträger 24a, 26a auf. Die zwei Querträger 24a, 26a sind als Querrohre ausgebildet. Die Querträger 24a, 26a weisen einen ringförmigen Querschnitt auf. Der erste Querträger 24a ist dabei als ein vorderer Querträger 24a ausgebildet. Der vordere Querträger 24a ist mit den vorderen Sitzfüßen 16a, 18a verbunden. Dabei sind die vorderen Sitzfüße 16a, 18a jeweils starr mit dem vorderen Querträger 24a verbunden. Der zweite Querträger 26a ist als ein hinterer Querträger 26a ausgebildet. Der hintere Querträger 26a ist mit den hinteren Sitzfüßen 20a, 22a verbunden. Dabei sind die hinteren Sitzfüße 20a, 22a jeweils starr und verdrehsicher mit dem hinteren Querträger 26a verbunden. Die Sitzfüße 16a, 18a, 20a, 22a sind jeweils über nicht näher beschriebene Koppelstellen kraft-, form- und/oder stoffschlüssig mit dem entsprechenden Querträger 24a, 26a verbunden. Die Querträger 24a, 26a erstrecken sich in einer Querrichtung der Flugzeugsitze 10a der Sitzreihe 12a. Dabei erstrecken sich die Querträger 24a, 26a über die gesamte Breite der Sitzreihe 12a. An einem gangseitigen Ende der Sitzreihe 12a weist die Flugzeugsitzvorrichtung ein Trittelement 164a auf. Das Trittelement 164a ist als ein Stewardstep ausgebildet. Das Trittelement 164a bildet dabei einen erhöhten Tritt für eine Person aus. Das Trittelement 164a ist dabei mit der Aufständereinheit 14a verbunden. Dabei ist das Trittelement 164a auf den Querträgern 24a, 26a aufgesteckt. Das Trittelement 164a ist aus einem Metall gebildet, wie insbesondere einem Aluminium. Grundsätzlich ist es auch denkbar, dass das Trittelement 164a aus einem Faserverbundwerkstoff gebildet ist.

Die Flugzeugsitzvorrichtung umfasst eine Sitzbodeneinheit 28a. Die Sitzbodeneinheit 28a ist dazu vorgesehen, eine Sitzfläche 30a für einen Passagier auszubilden. Auf der Sitzfläche 30a, den die Sitzbodeneinheit 28a ausbildet, kann ein Passagier sitzen. Die Sitzbodeneinheit 28a ist dabei mit der Aufständereinheit 14a verbunden. Die Sitzbodeneinheit 28a umfasst einen Grundkörper 32a. Der Grundkörper 32a der Sitzbodeneinheit 28a weist eine dünnwandige Rückwand 34a auf. Die dünnwandige Rückwand 34a ist aus einem Faserverbundwerkstoff gebildet. Dabei ist die Rückwand 34a von einer geformten CFK-Platte gebildet. Grundsätzlich ist es auch denkbar, dass die Rückwand 34a aus einem anderen, dem Fachmann als sinnvoll erscheinenden Faserverbundwerkstoff gebildet ist. Die dünnwandige Rückwand 34a schließt die Sitzbodeneinheit 28a nach unten hin ab. Die dünnwandige Rückwand 34a des Grundkörpers 32a der Sitzbodeneinheit 28a ist dabei der unter der Sitzbodeneinheit 28a angeordneten Aufständereinheit 14a zugewandt. Die Sitzbodeneinheit 28a umfasst eine dünnwandige Frontwand 36a. Die dünnwandige Frontwand 36a ist mit der dünnwandigen Rückwand 34a der Sitzbodeneinheit 28a verbunden. Die dünnwandige Frontwand 36a ist aus einem Faserverbundwerkstoff gebildet. Die dünnwandige Frontwand 36a ist dabei aus einem gleichen Material gebildet wie die dünnwandige Rückwand 34a. Die dünnwandige Frontwand 36a ist an einer Oberseite der Sitzbodeneinheit 28a angeordnet. Die dünnwandige Frontwand 36a der Sitzbodeneinheit 28a ist nach oben ausgerichtet. Die dünnwandige Frontwand 36a der Sitzbodeneinheit 28a bildet die Sitzfläche 30a aus. Die dünnwandige Rückwand 34a und die dünnwandige Frontwand 36a der Sitzbodeneinheit 28a sind miteinander verbunden. Dabei sind die dünnwandige Frontwand 36a und die dünnwandige Rückwand 34a stoffschlüssig miteinander verbunden. Die Sitzbodeneinheit 28a umfasst ein nicht näher dargestelltes Versteifungselement, das zur Versteifung der Sitzbodeneinheit 28a vorgesehen ist. Dazu ist das Versteifungselement zwischen der dünnwandigen Rückwand 34a und der dünnwandigen Frontwand 36a der Sitzbodeneinheit 28a angeordnet. Das Versteifungselement ist als ein Schaumkern ausgebildet. Grundsätzlich ist es auch denkbar, dass die Sitzbodeneinheit 28a kein oder ein anders ausgebildetes Versteifungselement aufweist. Die dünnwandige Frontwand 36a und/oder die dünnwandige Rückwand 34a können dabei grundsätzlich auch aus vorgefertigten Organosheets gebildet sein. Unter Organosheets sind dabei Fasermatrix-Halbzeuge zu verstehen, die in einer Kunststoffmatrix voreingelegte Verstärkungsfasern aufweisen. Die Sitzbodeneinheit 28a umfasst ein Komfortelement 38a. Das Komfortelement 38a ist zur Ausbildung der Sitzfläche 30a vorgesehen. Dazu ist das Komfortelement 38a auf einer nach oben gerichteten Außenseite der dünnwandigen Frontwand 36a der Sitzbodeneinheit 28a fest angebunden. Das Komfortelement 38a ist dabei von einem Polster und einem mit dem Polster lösbar verbundenen Bezug gebildet. Dabei ist das Komfortelement 38a über nicht näher dargestellte Verbindungselemente mit der dünnwandigen Frontwand 36a verbunden.

Die Flugzeugsitzvorrichtung umfasst eine Rückenlehneneinheit 40a. Die Rückenlehneneinheit 40a ist dazu vorgesehen, eine Rückenlehnenauflagefläche 42a bereitzustellen, an der sich ein auf dem Flugzeugsitz 10a sitzender Passagier mit seinem Rücken abstützen kann. Die Rückenlehneneinheit 40a ist dabei an einem hinteren Ende des Flugzeugsitzes 10a angeordnet. Die Rückenlehneneinheit 40a ist dabei an einem hinteren Ende der Sitzbodeneinheit 28a angeordnet. Die Rückenlehneneinheit 40a umfasst einen Grundkörper 44a. Der Grundkörper 44a umfasst eine dünnwandige Rückwand 46a. Die dünnwandige Rückwand 46a ist aus einem Faserverbundwerkstoff gebildet. Dabei ist die Rückwand 46a von einer geformten CFK-Platte gebildet. Grundsätzlich ist es auch denkbar, dass die Rückwand 46a aus einem anderen, dem Fachmann als sinnvoll erscheinenden Faserverbundwerkstoff gebildet ist. Die dünnwandige Rückwand 46a schließt die Rückenlehneneinheit 40a nach hinten hin ab. Die Rückwand 46a der Rückenlehneneinheit 40a ist dabei dem hinter der Flugzeugsitzvorrichtung angeordneten Bereich, in dem vorzugsweise eine weitere Sitzreihe angeordnet ist, zugewandt. Die Rückwand 46a ist auf einer Außenseite, die nach hinten von dem Flugzeugsitz 10a weggerichtet ist, mit einer nicht näher dargestellten oder bezeichneten Beschichtung beschichtet. Die Beschichtung ist dazu vorgesehen, dass die Außenseite der Rückwand 46a kratzfest ausgebildet ist. Die dünnwandige Rückwand 46a ist als ein sichtbares Designelement ausgebildet. Dazu ist die als sichtbares Designelement ausgebildete dünnwandige Rückwand 46a in einem komplett montierten Zustand des Flugzeugsitzes 10a insbesondere von hinten zu sehen. Dabei schließt die als sichtbares Designelement ausgebildete dünnwandige Rückwand 46a die Rückenlehneneinheit 40a nach hinten ab. Der Grundkörper 44a der Rückenlehneneinheit 40a umfasst eine dünnwandige Frontwand 48a. Die dünnwandige Frontwand 48a ist mit der dünnwandigen Rückwand 46a verbunden. Die dünnwandige Frontwand 48a ist aus einem Faserverbundwerkstoff gebildet. Die dünnwandige Frontwand 48a ist dabei im Wesentlichen aus einem gleichen Material gebildet wie die dünnwandige Rückwand 46a. Die dünnwandige Frontwand 48a ist an einer Vorderseite der Rückenlehneneinheit 40a angeordnet. In einer Sitzrichtung gesehen, ist die dünnwandige Frontwand 48a vor der dünnwandigen Rückwand 46a angeordnet. Die dünnwandige Rückwand 46a und die dünnwandige Frontwand 48a der Rückenlehneneinheit 40a sind miteinander verbunden. Dabei sind die dünnwandige Frontwand 48a und die dünnwandige Rückwand 46a stoffschlüssig miteinander verbunden. Grundsätzlich ist es auch denkbar, dass die dünnwandige Frontwand 48a und die dünnwandige Rückwand 46a nachträglich über eine geeignete Form-, Kraft- und/oder Stoffschlussverbindung in ihren Verbindungsbereichen miteinander fest verbunden sind. Die Rückenlehneneinheit 40a umfasst ein nicht näher dargestelltes Versteifungselement, das zur Versteifung der Rückenlehneneinheit 40a vorgesehen ist. Dazu ist das Versteifungselement zwischen der dünnwandigen Rückwand 46a und der dünnwandigen Frontwand 48a angeordnet und ist als ein Schaumkern ausgebildet. Das Versteifungselement ist aus einem schaumförmigen Material gebildet. Das als Schaumkern ausgebildete Versteifungselement ist dabei als Insert während eines Herstellungsverfahrens zwischen die dünnwandige Rückwand 46a und die dünnwandige Frontwand 48a eingelegt und verklebt, bevor die dünnwandige Rückwand 46a und die dünnwandige Frontwand 48a fest miteinander verbunden werden. Die dünnwandige Frontwand 48a und/oder die dünnwandige Rückwand 46a können dabei grundsätzlich auch aus vorgefertigten Organosheets gebildet sein. Die Flugzeugsitzvorrichtung umfasst ein Komfortelement 50a. Das Komfortelement 50a ist zur Ausbildung der Rückenlehnenauflagefläche 42a vorgesehen. Dazu ist das Komfortelement 50a auf einer Außenseite der dünnwandigen Frontwand 48a fest angebunden. Das Komfortelement 50a ist von einem Polster und einem das Polster überspannenden Bezug ausgebildet. Das Polster und der Bezug des Komfortelement 50a bilden in einem montierten Zustand eine Einheit aus. Grundsätzlich ist es auch denkbar, dass der Grundkörper 44a der Rückenlehneneinheit 40a zumindest teilweise aus einem Magnesium gebildet ist. Dabei ist es insbesondere denkbar, dass der Grundkörper 44a aus einem Magnesiumdruckguss gebildet ist.

Der Grundkörper 32a der Sitzbodeneinheit 28a und der Grundkörper 44a der Rückenlehneneinheit 40a sind einstückig miteinander ausgebildet. Dabei sind insbesondere die Frontwand 36a des Grundkörpers 32a der Sitzbodeneinheit 28a und die Frontwand 48a des Grundkörpers 44a der Rückenlehneneinheit 40a sowie die Rückwand 34a des Grundkörpers 32a der Sitzbodeneinheit 28a und die Rückwand 46a des Grundkörpers 44a der Rückenlehneneinheit 40a einstückig miteinander ausgebildet. Die Frontwand 36a des Grundkörpers 32a der Sitzbodeneinheit 28a und die Frontwand 48a des Grundkörpers 44a der Rückenlehneneinheit 40a sind aus einer oder mehreren Lagen von Faserverbundwerkstoffplatten gebildet. Die Rückwand 34a des Grundkörpers 32a der Sitzbodeneinheit 28a und die Rückwand 46a des Grundkörpers 44a der Rückenlehneneinheit 40a sind ebenfalls aus einer oder mehreren Lagen von Faserverbundwerkstoffplatten gebildet. Dabei ist es denkbar, dass sowohl die Frontwände 36a, 48a als auch die Rückwände 34a, 46a aus Lagen unterschiedlicher Faserverbundwerkstoffe gebildet sind, beispielsweise aus CFK und GFK.

Die Flugzeugsitzvorrichtung weist ein Trägerelement 52a und ein zweites Trägerelement 54a auf, die dem Flugzeugsitz 10a zugeordnet sind. Die beiden Trägerelemente 52a, 54a sind dazu vorgesehen, die Sitzbodeneinheit 28a und die Rückenlehneneinheit 40a mit der Aufständereinheit 14a zu koppeln. Die Flugzeugsitzvorrichtung weist zur Anbindung der beiden weiteren Flugzeugsitze 60a, 62a zwei weitere Trägerelemente 56a, 58a auf. Dabei ist jeweils eines der weiteren Trägerelemente 56a, 58a zusammen mit einem der Trägerelemente 52a, 54a zur Anbindung eines der Flugzeugsitze 60a, 62a vorgesehen. Die Trägerelemente 52a, 54a, 56a, 58a sind dabei gleich ausgebildet. Grundsätzlich ist es auch denkbar, dass die Trägerelemente 52a, 54a, 56a, 58a zumindest teilweise unterschiedlich ausgebildet sind und zum Teil abweichende Funktionen haben. Im Folgenden werden lediglich die Trägerelemente 52a, 54a des ersten Flugzeugsitzes 10a näher beschrieben. Zur Erläuterung der weiteren Trägerelemente 56a, 58a kann die folgende Beschreibung der anderen Trägerelemente 52a, 54a herangezogen werden.

Die Trägerelemente 52a, 54a sind dabei als plattenförmige Elemente ausgebildet. Die Trägerelemente 52a, 54a weisen eine im Wesentlichen konstante Dicke auf. In die Trägerelemente 52a, 54a sind dabei nicht näher beschriebene Durchgangslöcher eingebracht, die zur Gewichtsreduzierung der Trägerelemente 52a, 54a vorgesehen sind. Die Trägerelemente 52a, 54a sind dabei aus einem Aluminium gebildet. Grundsätzlich ist es auch denkbar, dass die Trägerelemente 52a, 54a aus einem anderen Material, wie beispielsweise einem anderen Leichtmetall, wie insbesondere einem Magnesium, einem Titan oder beispielsweise aus einem Faserverbundwerkstoff gebildet sind. Die Trägerelemente 52a, 54a erstrecken sich über einen Großteil einer Sitztiefe der Sitzfläche 30a der Sitzbodeneinheit 28a. Die Sitztiefe erstreckt sich dabei von einem vorderen Ende der Sitzbodeneinheit 28a bis an ein hinteres Ende der Sitzbodeneinheit 28a, an dem die Rückenlehneneinheit 40a angeordnet ist. Die Trägerelemente 52a, 54a sind dabei in Querrichtung beabstandet zueinander angeordnet. Die Trägerelemente 52a, 54a weisen dabei einen Abstand zueinander auf, der in etwa einer Breite der Sitzbodeneinheit 28a entspricht. Die Trägerelemente 52a, 54a sind jeweils mit dem vorderen Querträger 24a und dem hinteren Querträger 26a verbunden. Dabei sind die Trägerelemente 52a, 54a jeweils starr mit dem entsprechenden Querträger 24a, 26a verbunden. Die Trägerelemente 52a, 54a sind dabei axial fixiert auf den Querträgern 24a, 26a angeordnet. Zur Anbindung an die Querträger 24a, 26a weisen die Trägerelemente 52a, 54a jeweils einen vorderen Anbindungsbereich 64a und einen hinteren Anbindungsbereich 66a auf. Über den vorderen Anbindungsbereich 64a sind die Trägerelemente 52a, 54a jeweils mit dem vorderen Querträger 24a verbunden. Mit dem hinteren Anbindungsbereich 66a sind die Trägerelemente 52a, 54a jeweils mit dem hinteren Querträger 26a verbunden. In den Anbindungsbereichen 64a, 66a umschließen die Trägerelemente 52a, 54a den jeweiligen Querträger 24a, 26a. In einem Bereich zwischen den beiden Querträgern 24a, 26a weisen die Trägerelemente 52a, 54a eine im Wesentlichen parallel zu der Aufständerebene verlaufende Oberkante 68a auf. In Richtung des vorderen Querträgers 24a laufen die Trägerelemente 52a, 54a leicht spitz zu. Eine Unterkante der Trägerelemente 52a, 54a ist dabei jeweils zu der entsprechenden Oberkante 68a geneigt. Die Oberkante 68a der Trägerelemente 52a, 54a liegt dabei oberhalb der Querträger 24a, 26a. In einem Bereich des hinteren Querträgers 26a erstrecken sich die Trägerelemente 52a, 54a mit einem hintern Endbereich 70a nach oben von den Querträgern 24a, 26a weg. Der hintere Endbereich 70a bildet dabei in etwa eine Dreiecksform aus. An einem hinteren Ende bildet der Endbereich 70a ein Aufnahmeloch 72a aus. Der Endbereich 70a endet dabei in etwa in einem Übergangsbereich zwischen der Sitzbodeneinheit 28a und der Rückenlehneneinheit 40a.

Die Trägerelemente 52a, 54a sind dazu vorgesehen, die Sitzbodeneinheit 28a mit der Aufständereinheit 14a zu koppeln. Über die Trägerelemente 52a, 54a ist ebenfalls die Rückenlehneneinheit 40a mit der Aufständereinheit 14a gekoppelt. Die Trägerelemente 52a, 54a sind dabei unterhalb der Sitzbodeneinheit 28a angeordnet. Dabei sind die Trägerelemente 52a, 54a insbesondere unterhalb einer Oberkante 74a der Sitzbodeneinheit 28a angeordnet.

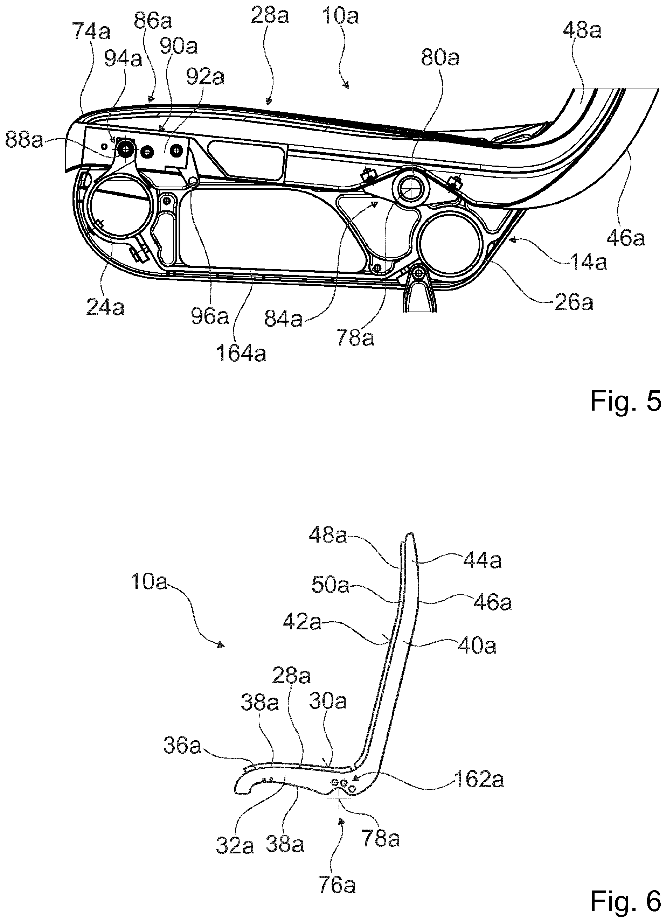

Die Sitzbodeneinheit 28a und die Rückenlehneneinheit 40a sind dazu vorgesehen, schwenkbar mit der Aufständereinheit 14a verbunden zu sein. Durch die schwenkbare Lagerung der Sitzbodeneinheit 28a und der Rückenlehneneinheit 40a kann der Flugzeugsitz 10a in eine TTL-Position und in eine Komfortposition gebracht werden. Grundsätzlich wäre es auch denkbar, dass der Flugzeugsitz 10a durch die schwenkbare Lagerung in weitere Sitzpositionen verschwenkbar ist. Zur schwenkbaren Lagerung der Sitzbodeneinheit 28a und der Rückenlehneneinheit 40a weist die Flugzeugsitzvorrichtung ein Lagermodul 76a auf. Das Lagermodul 76a ist als ein Schwenklager ausgebildet. Das Lagermodul 76a bildet eine Schwenkachse 78a aus, über die die Sitzbodeneinheit 28a und die Rückenlehneneinheit 40a zu der Aufständereinheit 14a verschwenkbar sind. Die Schwenkachse 78a bildet einen Drehpunkt aus, um den die Sitzbodeneinheit 28a und die Rückenlehneneinheit 40a gemeinsam schwenkbar sind. Die Schwenkachse 78a ist dabei unterhalb der Sitzbodeneinheit 28a angeordnet. Die Schwenkachse 78a des Lagermoduls 76a ist koaxial zu einer Querrichtung der Aufständereinheit 14a ausgerichtet. Eine Verschwenkung der Sitzbodeneinheit 28a und der Rückenlehneneinheit 40a erfolgt dabei um einen Punkt unterhalb der Sitzbodeneinheit 28a. Dadurch kann eine besonders vorteilhafte Verschwenkung der Sitzbodeneinheit 28a und der Rückenlehneneinheit 40a erreicht werden. Die Schwenkachse 78a ist dabei, in Sitzrichtung gesehen, vor dem hinteren Querträger 26a angeordnet. Grundsätzlich ist es dabei denkbar, dass die Schwenkachse 78a des Lagermoduls 76a an unterschiedlichen Positionen 162a der Sitzbodeneinheit 28a und/oder der Rückenlehneneinheit 40a angeordnet ist. Dazu sind in Figur 6 schematisch Positionen 162a angezeigt, in denen die Schwenkachse 78a des Lagermoduls 76a in der Sitzbodeneinheit 28a und/oder der Rückenlehneneinheit 40a angeordnet sein kann.

Das Lagermodul 76a umfasst ein Torsionselement 80a. Das Torsionselement 80a ist als ein Torsionsrohr ausgebildet. Das Torsionselement 80a bildet die Schwenkachse 78a aus. Das Torsionselement 80a ist verdrehbar zwischen den Trägerelementen 52a, 54a angeordnet. Das Torsionselement 80a erstreckt sich über eine Sitzbreite der Sitzbodeneinheit 28a. Das Torsionselement 80a ist über die Trägerelemente 52a, 54a mit der Aufständereinheit 14a verbunden. Die Sitzbodeneinheit 28a und die Rückenlehneneinheit 40a sind über das Torsionselement 80a an die Aufständereinheit 14a angebunden. Dazu weisen die Trägerelemente 52a, 54a jeweils eine Lageraufnahme 82a auf. Die Lageraufnahmen 82a sind als Gleitlager ausgebildet. Grundsätzlich ist es auch denkbar, dass in den Lageraufnahmen 82a Wälzlager angeordnet sind. Das Torsionselement 80a erstreckt sich von dem einen Trägerelement 52a bis zu dem anderen Trägerelement 54a. Das Lagermodul 76a weist zwei Anbindungselemente 84a auf. Die Anbindungselemente 84a sind dazu vorgesehen, die Sitzbodeneinheit 28a mit dem Torsionselement 80a zu koppeln. Grundsätzlich ist es auch denkbar, dass das Torsionselement 80a in die Sitzbodeneinheit 28a mit einlaminiert ist oder direkt aus CFK-und/oder GFK-Lagen gebildet ist. Die Anbindungselemente 84a sind an einer Unterseite der Sitzbodeneinheit 28a fest angebunden. Dazu sind die Anbindungselemente 84a über nicht näher dargestellte Verbindungselemente starr mit der Sitzbodeneinheit 28a verbunden. Dabei ist es denkbar, dass die Verbindungselemente als Schraubenelemente, oder als andere, dem Fachmann als sinnvoll erscheinende Form- und/oder Kraftschlusselemente ausgebildet sind. Grundsätzlich ist es beispielsweise auch denkbar, dass die Anbindungselemente 84a stoffschlüssig mit der Sitzbodeneinheit 28a verbunden sind oder dass die Anbindungselemente 84a einstückig mit der Sitzbodeneinheit 28a ausgebildet sind. Die Anbindungselemente 84a sind beabstandet zueinander angeordnet. Dabei ist eines der Anbindungselemente 84a auf einer dem einen Trägerelement 52a zugewandten Seite und eines auf der dem Trägerelement 54a zugewandten Seite angeordnet. Das Torsionselement 80a ist verdrehfest mit den Anbindungselementen 84a verbunden. Über die Verbindung zwischen dem Torsionselement 80a und den Anbindungselementen 84a können Kräfte sowohl in Axial- als auch in Umfangsrichtung übertragen werden. Über das Torsionselement 80a kann die Sitzbodeneinheit 28a und damit der Flugzeugsitz 10a zwischen seiner TTL-Position und seiner Komfortposition verdreht werden. In der TTL-Position ist die Sitzbodeneinheit 28a im Wesentlichen parallel zu der Aufständerebene ausgerichtet. Die TTL-Position stellt eine aufrechte Sitzposition des Flugzeugsitzes 10a dar. In der TTL-Position liegt die Sitzbodeneinheit 28a mit Abstützflächen an der Unterseite der Sitzbodeneinheit 28a auf Teilen der Trägerelemente 52a, 54a auf. Dadurch können in der TTL-Position Kräfte von der Sitzbodeneinheit 28a einfach und vorteilhaft in die Trägerelemente 52a, 54a und damit in die Aufständereinheit 14a eingeleitet werden. In der Komfortposition sind die Sitzbodeneinheit 28a und die Rückenlehneneinheit 40a entgegen der Sitzrichtung um die Schwenkachse 78a nach hinten verschwenkt. Dabei sind die Sitzbodeneinheit 28a und die Rückenlehneneinheit 40a um 3 Grad nach hinten verschwenkt. Grundsätzlich ist es auch denkbar, dass die Sitzbodeneinheit 28a und die Rückenlehneneinheit 40a in der Komfortposition um einen anderen, dem Fachmann als sinnvoll erscheinenden Winkel, beispielsweise 5 Grad oder 8 Grad, verschwenkt sind. Die Flugzeugsitzeinheit weist einen nicht näher dargestellten Anschlag auf, an dem die Sitzbodeneinheit 28a und/oder die Rückenlehneneinheit 40a in der Komfortposition anschlagen und so einen Schwenkwinkel der Sitzbodeneinheit 28a und der Rückenlehneneinheit 40a begrenzen. Der Anschlag ist dabei an der Aufständereinheit 14a oder den Trägerelementen 52a, 54a angeordnet.

Zur Verriegelung der Sitzbodeneinheit 28a und der Rückenlehneneinheit 40a weist die Flugzeugsitzvorrichtung ein Verriegelungsmodul 86a auf. Das Verriegelungsmodul 86a ist dazu vorgesehen, die Sitzbodeneinheit 28a und die Rückenlehneneinheit 40a in einer Sitzstellung zu verriegeln. Das Verriegelungsmodul 86a fixiert die Sitzbodeneinheit 28a und die Rückenlehneneinheit 40a lediglich in einer Stellung. Dabei ist das Verriegelungsmodul 86a insbesondere dazu vorgesehen, die Sitzbodeneinheit 28a und die Rückenlehneneinheit 40a in der TTL-Position zu verriegeln. Das Verriegelungsmodul 86a ist dazu vorgesehen, den Flugzeugsitz 10a in der TTL-Position zu verriegeln. Das Verriegelungsmodul 86a verriegelt die Sitzbodeneinheit 28a und die Rückenlehneneinheit 40a in der Komfortposition insbesondere nicht. Das Verriegelungsmodul 86a ist dazu vorgesehen, den Flugzeugsitz 10a ausschließlich in der TTL-Position zu verriegeln. Das Verriegelungsmodul 86a verriegelt den Flugzeugsitz 10a in der Komfortstellung nicht. Das Verriegelungsmodul 86a ist als ein rein mechanisches Modul ausgebildet. Grundsätzlich ist es ebenso denkbar, dass das Verriegelungsmodul 86a auch als ein elektromechanisches oder elektromagnetisches Modal ausgebildet ist. Insbesondere weist das Verriegelungsmodul 86a keine Gasdruckfedern auf. Das Verriegelungsmodul 86a ist, in einer Querrichtung gesehen, seitlich an dem Flugzeugsitz 10a angeordnet. Grundsätzlich ist es auch denkbar, dass das Verriegelungsmodul 86a in Querrichtung mittig an dem Flugzeugsitz 10a angeordnet ist. Das Verriegelungsmodul 86a ist zu einer rein mechanischen Verriegelung des Flugzeugsitzes 10a vorgesehen. Das Verriegelungsmodul 86a umfasst ein fest mit der Sitzbodeneinheit 28a verbundenes Verriegelungselement 88a. Das Verriegelungselement 88a ist als ein Verriegelungsbolzen ausgebildet. Grundsätzlich ist es auch denkbar, dass das Verriegelungselement 88a auf eine andere, dem Fachmann als sinnvoll erscheinende Weise ausgebildet ist, wie beispielsweise als ein Hakenelement. Das Verriegelungselement 88a an einer Unterseite der Sitzbodeneinheit 28a angeordnet. Das Verriegelungsmodul 86a weist eine Verriegelungseinheit 90a auf. Die Verriegelungseinheit 90a ist fest mit der Aufständereinheit 14a verbunden. Dabei ist die Verriegelungseinheit 90a an einem vorderen Querträger 24a angeordnet. Die Verriegelungseinheit 90a ist an einer oberen Seite des Querträgers 24a angeordnet. Die Verriegelungseinheit 90a ist über Befestigungselemente an dem Querträger 24a angebunden. Dabei ist es denkbar, dass ein Befestigungselement als eine Schelle ausgebildet ist. Grundsätzlich ist es auch denkbar, dass die Verriegelungseinheit 90a über eine andere Stoff- und/oder Formschlussverbindung mit dem vorderen Querträger 24a verbunden ist. Durch die Anbindung an den vorderen Querträger 24a kann eine besonders vorteilhafte Krafteinleitung erreicht werden. Grundsätzlich ist es auch denkbar, dass die Verriegelungseinheit 90a an eines der Trägerelemente 52a, 54a angebunden ist. Die Verriegelungseinheit 90a ist zur Verriegelung des Verriegelungsmoduls 86a formschlüssig mit dem Verriegelungselement 88a verbindbar. Die Verriegelungseinheit 90a umfasst ein Gehäuse 92a, das einen U-förmigen Querschnitt aufweist. Das Gehäuse 92a weist eine Ausnehmung auf. Die Verriegelungseinheit 90a umfasst ein schwenkbares Formschlusselement 94a. Das Formschlusselement 94a ist an einem Ende als ein Haken ausgebildet. Das Formschlusselement 94a ist über eine nicht näher dargestellte Lagereinheit schwenkbar mit dem Gehäuse 92a verbunden. Das Formschlusselement 94a ist in einer Verriegelstellung arretierbar. In der Verriegelstellung ist das Formschlusselement 94a so in dem Gehäuse 92a angeordnet, dass das als Haken ausgebildete Ende des Formschlusselements 94a in der Ausnehmung des Gehäuses 92a angeordnet ist. Dabei bildet das Formschlusselement 94a zusammen mit dem Gehäuse 92a einen geschlossenen Bereich aus, in dem das Verriegelungselement 88a angeordnet werden kann. Dadurch ist das Verriegelungselement 88a formschlüssig mit dem Formschlusselement 94a verbunden. Das Formschlusselement 94a ist dabei durch nicht näher dargestellte Rastelemente in der Verriegelstellung verrastet. In einer aus der Verriegelstellung herausgeschwenkten Stellung ist das Formschlusselement 94a nicht verrastet und kann verschwenkt werden. Das Verriegelungsmodul 86a weist einen Betätigungshebel 96a auf. Der Betätigungshebel 96a ist dazu vorgesehen, das Formschlusselement 94a aus der Verriegelstellung zu lösen. Der Betätigungshebel 96a ist schwenkbar an dem Gehäuse 92a gelagert. Ist das Verriegelungselement 88a über das Formschlusselement 94a in dem Verriegelungsmodul 86a verriegelt, kann er durch Betätigen des Betätigungshebels 96a entriegelt werden. Das Verriegelungsmodul 86a umfasst ein Betätigungselement 98a. Das Betätigungselement 98a ist mit dem Betätigungshebel 96a gekoppelt, um diesen zu betätigen. Das Betätigungselement 98a verbindet den Betätigungshebel 96a des Verriegelungsmoduls 86a mit einem Bedienelement 132a, das zu einer Betätigung durch eine Person vorgesehen ist. Das Bedienelement 132a ist dabei als ein Hebel ausgebildet, der dazu vorgesehen ist, durch einen Passagier verschwenkt zu werden. Grundsätzlich ist es auch denkbar, dass das Bedienelement 132a als ein anderes, dem Fachmann als sinnvoll erscheinendes Bedienelement ausgebildet ist, wie beispielsweise ein Druckknopf oder ein Zugelement. Das Betätigungselement 98a ist als ein Bowdenzug ausgebildet. Grundsätzlich ist es auch denkbar, dass das Betätigungselement 98a auf eine andere, dem Fachmann als sinnvoll erscheinende Weise ausgebildet ist, beispielsweise als ein anderes Zugelement oder ein Gestänge. Grundsätzlich ist es auch denkbar, dass das Verriegelungsmodul 86a ein Federelement umfasst, das eine gegen eine Verstellung der Rückenlehneneinheit 40a aus der TTL-Position gerichtete Gegenkraft auf die Rückenlehneneinheit 40a und/oder die Sitzbodeneinheit 28a ausübt. Dabei würde das Federelement dem Passagier beim Verstellen des Flugzeugsitzes 10a von der TTL-Position in die Komfortposition einen Widerstand entgegensetzen, um ein schlagartiges oder unkontrolliertes Verkippen in die Komfortposition zu verhindern. Dabei ist es denkbar, ein nicht lineares Federelement zu verwenden, um kurz vor Erreichen der Komfortposition eine stärkere Gegenkraft bereitzustellen, um ein sanftes Erreichen der Komfortposition zu gewährleisten. Die von dem Federelement auf die Rückenlehneneinheit 40a ausgeübte Gegenkraft würde dabei bei einer Verstellung aus der Komfortposition zurück in Richtung der TTL-Position eine Verstellung unterstützen. Dadurch kann vorteilhaft ein Komfort des Flugzeugsitzes 10a erhöht werden. Grundsätzlich wäre es ebenfalls denkbar, dass die Rückenlehneneinheit 40a und/oder die Sitzbodeneinheit 28a über das Verriegelungsmodul 86a in weiteren Zwischenstellungen zwischen der TTL-Position und der Komfortposition fixiert werden können. Dabei könnte über das in das Verriegelungsmodul 86 integrierte Federelement eine Haltekraft ausgeübt werden, mittels der die Rückenlehneneinheit 40a und oder die Sitzbodeneinheit 28 fixierbar wäre.

Der Flugzeugsitz 10a umfasst zwei Armlehnen 100a, 102a. Die Armlehnen 100a, 102a sind dabei jeweils auf einer Seite des Flugzeugsitzes 10a angebracht. Die Armlehnen 100a, 102a sind direkt mit der Rückenlehneneinheit 40a verbunden. Dazu weist die Rückenlehneneinheit 40a seitlich nicht näher dargestellte Anbindungspunkte auf, über die die Armlehnen 100a, 102a schwenkbar an die Rückenlehneneinheit 40a angebunden sind. Das Bedienelement 132a zur Betätigung des Verriegelungsmoduls 86a durch einen Passagier ist in der Armlehne 102a untergebracht. Das als Bowdenzug ausgebildete Betätigungselement 98a ist dazu von dem Betätigungshebel 96a bis in die Armlehne 100a geführt und dort mit dem Bedienelement 132a verbunden. Das als Bowdenzug ausgebildete Betätigungselement 98a ist dabei beispielsweise durch eine mittige Ausnehmung in einem Lagerbolzen zur schwenkbaren Lagerung der Armlehne 102a ins Innere der Armlehne 102a und bis an das Bedienelement 132a geführt.

Die Flugzeugsitzvorrichtung umfasst zwei Gurtanbindungselemente 104a, 106a. Die Gurtanbindungselemente 104a, 106a sind dazu vorgesehen, einen Sicherheitsgurt des Flugzeugsitzes 10a an die Aufständereinheit 14a anzubinden. Je ein Gurtanbindungselement 104a, 106a ist auf einer Seite des Flugzeugsitzes 10a angeordnet. Die Gurtanbindungselemente 104a, 106a sind jeweils mit den Trägerelementen 52a, 54a des Flugzeugsitzes 10a verbunden. Die beiden Gurtanbindungselemente 104a, 106a sind dabei gleich ausgebildet, weswegen im Folgenden lediglich das eine Gurtanbindungselement 104a näher beschrieben wird. Das Gurtanbindungselement 104a ist über das Aufnahmeloch 72a mit dem Trägerelement 52a verbunden. Dabei ist das Gurtanbindungselement 104a formschlüssig über ein Befestigungselement, wie beispielsweise eine Schraube oder eine Niete, mit dem Trägerelement 52a verbunden. An einem dem Trägerelement 52a abgewandten Ende weist das Gurtanbindungselement 104a einen Anbindungsbereich auf, über den der Sicherheitsgurt mit einem Ende an dem Gurtanbindungselement 104a angebunden ist. Grundsätzlich ist es auch denkbar, dass das Gurtanbindungselement 104a in einem Bereich unterhalb der Sitzbodeneinheit 28a und/oder hinter der Rückenlehneneinheit 40a angeordnet ist und die Sitzbodeneinheit 28a und/oder die Rückenlehneneinheit 40a ein Durchgangsloch aufweisen, durch die der Sicherheitsgurt des Flugzeugsitzes 10a geführt ist.

Ist der Flugzeugsitz 10a in einer TTL-Position, sind die Sitzbodeneinheit 28a und die Rückenlehneneinheit 40a über die Verriegelungseinheit 90a verriegelt. Kräfte werden über das Torsionselement 80a und die Trägerelemente 52a, 54a direkt von der Sitzbodeneinheit 28a in die Aufständereinheit 14a eingeleitet. Durch Betätigung des Bedienelements 132a durch den Passagier kann die Verriegelungseinheit 90a entriegelt werden. Durch Gewichtsverlagerung nach hinten in Richtung der Rückenlehneneinheit 40a kann der Passagier die Sitzbodeneinheit 28a und die Rückenlehneneinheit 40a nach hinten kippen, um den Flugzeugsitz 10a in die Komfortstellung zu bringen. Dabei wird die Verriegelungseinheit 90a von dem Verriegelungselement 88a gelöst. In der Komfortstellung ist der Flugzeugsitz 10a nicht verriegelt. Durch Gewichtsverlagerung nach vorne kann der Passagier die Sitzbodeneinheit 28a und die Rückenlehneneinheit 40a wieder nach vorne schwenken, wodurch das Verriegelungselement 88a wieder in dem Formschlusselement 94a der Verriegelungseinheit 90a einschnappt und verrastet. Dadurch ist der Flugzeugsitz 10a wieder in seiner TTL-Position verrastet.

Die weiteren Flugzeugsitze 60a, 62a der Sitzreihe 12a, die jeweils auf einer Seite des Flugzeugsitzes 10a angeordnet sind weisen jeweils eine Rückenlehneneinheit 134a, 136a und eine mit der Rückenlehneneinheit 134a, 136a verbundene Armlehne 138a, 140a auf. Die Flugzeugsitze 60a, 62a weisen jeweils lediglich eine Armlehne 138a, 140a auf. Die Armlehnen 138a, 140a sind dabei jeweils auf einer dem Flugzeugsitz 10a abgewandten Seite der Rückenlehneneinheit 134a, 136a des Flugzeugsitzes 60a, 62a angeordnet. Die Armlehnen 100a, 102a des mittleren Flugzeugsitzes 10a der Sitzreihe 12a sind für die den jeweilig zugewandten äußeren Flugzeugsitz 60a, 62a vorgesehen. Die Armlehnen 138a, 140a der Flugzeugsitze 60, 62a sind dabei im Wesentlichen gleich zu den Armlehnen 100a, 102a des Flugzeugsitzes 10a ausgebildet. Durch einen geringen Abstand der äußeren Flugzeugsitze 60a, 62a zu dem mittleren Flugzeugsitz 10a der Sitzreihe 12a kann trotz der an dem Flugzeugsitz 10a angebrachten Armlehnen 100a, 102a, die auch für die äußeren Flugzeugsitze 60a, 62a vorgesehen sind, eine vorteilhaft komfortable Armablage für einen Passagier der äußeren Flugzeugsitze 60a, 62a bereitgestellt werden. Auch bei einer Verstellung einer der Flugzeugsitze 10a, 60a, 62a in eine Komfortposition kann von dem benachbarten Flugzeugsitz 10a, 60a, 62a, der in einer TTL- Position angeordnet ist, die von beiden benachbarten Flugzeugsitzen 10a, 60a, 62a gemeinsame Armlehne 100a, 102a komfortabel genutzt werden.

Grundsätzlich wäre es auch denkbar, dass die Rückenlehneneinheit 40a und die Sitzbodeneinheit 28a des Flugzeugsitzes 10a getrennt voneinander ausgebildet sind. Dabei wäre es denkbar, dass die Rückenlehneneinheit 40a und die Sitzbodeneinheit 28a direkt über Verbindungselemente miteinander verbunden sind oder dass sowohl die Sitzbodeneinheit 28a als auch die Rückenlehneneinheit 40a über entsprechende Verbindungselemente mit den Trägerelementen 52a, 54a verbunden sind. Dabei ist es denkbar, dass die Rückenlehneneinheit 40a und/oder die Sitzbodeneinheit 28a starr mit den Trägerelementen 52a, 54a gekoppelt sind. Genauso ist es denkbar, dass die Sitzbodeneinheit 28a und/oder die Rückenlehneneinheit 40a gemeinsam oder einzeln über ein entsprechendes Lagermodul schwenkbar zu der Aufständereinheit 14a des Flugzeugsitzes 10a ausgebildet sind, um so eine TTL-Position und eine Komfortposition darzustellen.

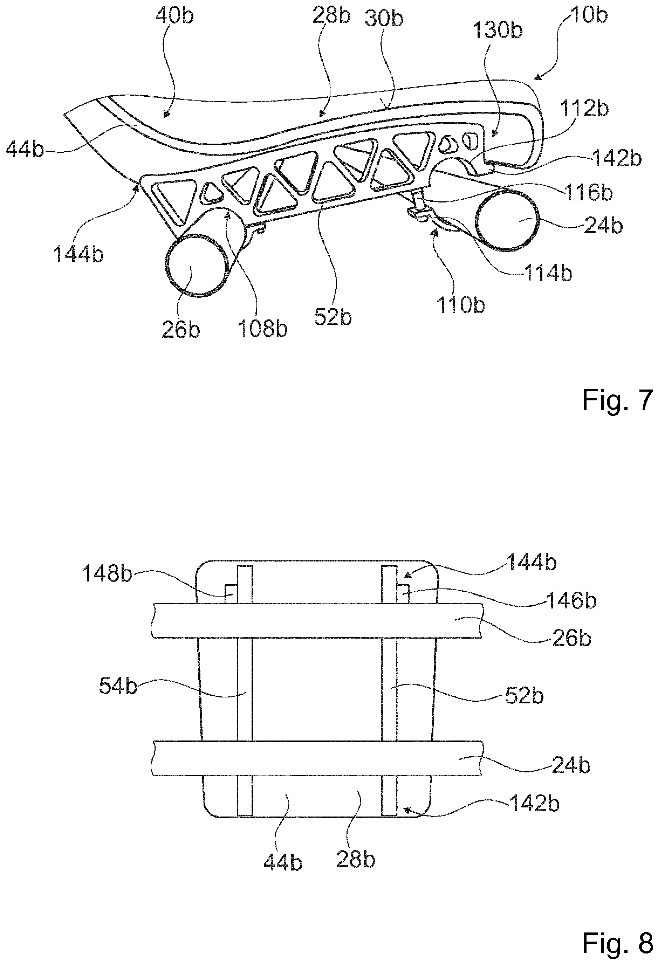

In den Figuren 7 bis 13 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in Figuren 1 bis 6 nachgestellt. In den Ausführungsbeispielen der Figuren 7 bis 13 ist der Buchstabe a durch die Buchstaben b und e ersetzt.

Die Figuren 7 bis 9 zeigen schematisch eine Flugzeugsitzvorrichtung in einem zweiten Ausführungsbeispiel. Die Flugzeugsitzvorrichtung ist Teil eines Flugzeugsitzes 10b. Der Flugzeugsitz 10b ist dabei Teil einer Sitzreihe 12b aus mehreren Flugzeugsitzen 10b, 60b, 62b. Die Sitzreihe 12b weist drei nebeneinander angeordnete Flugzeugsitze 10b, 60b, 62b auf. Der Flugzeugsitz 10b ist dazu vorgesehen, in einer Flugzeugkabine eines Flugzeugs aufgeständert zu werden. Der Flugzeugsitz 10b umfasst eine Aufständereinheit 14b. Über die Aufständereinheit 14b sind alle Flugzeugsitze 10b, 60b, 62b der Sitzreihe 12b aufgeständert. Die Aufständereinheit 14b ist dazu vorgesehen, den Flugzeugsitz 10b auf dem Kabinenboden der Flugzeugkabine aufzuständern. Die Aufständereinheit 14b weist zwei Querträger 24b, 26b auf. Die zwei Querträger 24b, 26b sind als Querrohre ausgebildet. Die Querträger 24b, 26b weisen einen ringförmigen Querschnitt auf. Der erste Querträger 24b ist dabei als ein vorderer Querträger 24b ausgebildet. Der vordere Querträger 24b ist mit vorderen Sitzfüßen verbunden. Dabei sind die vorderen Sitzfüße jeweils starr mit dem vorderen Querträger 24b verbunden. Der zweite Querträger 26b ist als ein hinterer Querträger 26b ausgebildet. Der hintere Querträger 26b ist mit hinteren Sitzfüßen verbunden. Dabei sind die hinteren Sitzfüße jeweils starr und verdrehsicher mit dem hinteren Querträger 26b verbunden.

Die Flugzeugsitzvorrichtung umfasst eine Sitzbodeneinheit 28b. Die Sitzbodeneinheit 28b ist dazu vorgesehen, eine Sitzfläche 30b für einen Passagier auszubilden. Auf der Sitzfläche 30b, die die Sitzbodeneinheit 28b ausbildet, kann ein Passagier sitzen. Die Flugzeugsitzvorrichtung umfasst eine Rückenlehneneinheit 40b. Die Rückenlehneneinheit 40b ist dazu vorgesehen, eine Rückenlehnenauflagefläche 42b bereitzustellen, an der sich ein auf dem Flugzeugsitz 10b sitzender Passagier mit seinem Rücken abstützen kann. Die Rückenlehneneinheit 40b weist einen Grundkörper 44b auf. Der Grundkörper 44b ist aus einem Faserverbundwerkstoff gebildet. Dabei weist der Grundkörper 44b eine Frontwand 48b auf, die aus mehreren Faserverbundlagen gebildet ist. Dabei ist es denkbar, dass die Frontwand 48b, die den Grundkörper 44b ausbildet, aus unterschiedlichen Faserverbundlagen, wie insbesondere CFK-Lagen und/oder GFK-Lagen, gebildet ist. Die Sitzbodeneinheit 28b ist teilweise einstückig mit der Rückenlehneneinheit 40b ausgebildet. Die Sitzbodeneinheit 28b ist von dem Grundkörper 44b, der die Rückenlehneneinheit 40b bildet, ausgebildet. Die Sitzbodeneinheit 28b und die Rückenlehneneinheit 40b sind zusammen von einem gemeinsamen Grundkörper 44b gebildet. Der gemeinsame Grundkörper 44b bildet eine tragende Schale des Flugzeugsitzes 10b aus. Die Sitzbodeneinheit 28b und die Rückenlehneneinheit 40b sind über die Aufständereinheit 14b gemeinsam auf einem Kabinenboden einer Flugzeugkabine aufgeständert.

Die Flugzeugsitzvorrichtung weist ein Trägerelement 52b und ein zweites Trägerelement 54b auf, die dem Flugzeugsitz 10b zugeordnet sind. Die beiden Trägerelemente 52b, 54b sind dazu vorgesehen, die Sitzbodeneinheit 28b und die Rückenlehneneinheit 40b mit der Aufständereinheit 14b zu koppeln. Die Trägerelemente 52b, 54b sind unterhalb der Sitzbodeneinheit 28b angeordnet. Dabei sind die Trägerelemente 52b, 54b von der Sitzbodeneinheit 28b nach oben abgedeckt. Die Trägerelemente 52b, 54b ragen seitlich nicht über die Sitzbodeneinheit 28b hinaus. Die Trägerelemente 52b, 54b sind dabei als plattenförmige Elemente ausgebildet. In die Trägerelemente 52b, 54b sind dabei nicht näher beschriebene Durchgangslöcher eingebracht, die zur Gewichtsreduzierung der Trägerelemente 52b, 54b vorgesehen sind. Die Trägerelemente 52b, 54b erstrecken sich über einen Großteil einer Sitztiefe der Sitzfläche 30b der Sitzbodeneinheit 28b. Die Trägerelemente 52b, 54b sind dabei in Querrichtung beabstandet zueinander angeordnet. Die Trägerelemente 52b, 54b sind direkt mit der Sitzbodeneinheit 28b verbunden. Die Trägerelemente 52b, 54b sind dabei direkt mit einer Unterseite des Grundkörpers 44b verbunden. Dabei sind die Trägerelemente 52b, 54b über eine Klebeverbindung starr mit dem Grundkörper 44b verbunden. Grundsätzlich ist es auch denkbar, dass die Trägerelemente 52b, 54b zusätzlich über Schraubenverbindungen und/oder andere formschlüssige Verbindungen fest mit dem Grundkörper 44b verbunden sind. Grundsätzlich ist es auch denkbar, dass die Trägerelemente 52b, 54b an den Grundköper 44b anlaminiert und/oder von diesem überspritzt sind. Dies ist insbesondere denkbar, wenn der Grundkörper 44b aus einem Faserverbundwerkstoff gebildet ist. In einem vorderen Bereich 130b sind der Grundkörper 44b und die Trägerelemente 52b, 54b formschlüssig aneinander angepasst. Dabei liegt eine Vorderkante des Grundkörpers 44b jeweils auf einem Vorsprung 142b des entsprechenden Trägerelements 52b, 54b auf. In einem hinteren Bereich 144b sind die Trägerelemente 52b, 54b in einem Übergangsbereich zwischen der Sitzbodeneinheit 28b und der Rückenlehneneinheit 40b leicht nach oben erstreckt und bilden dabei eine untere Kontur des Grundkörpers 44b ab. Dadurch ist eine zusätzliche formschlüssige Verbindung zwischen den Trägerelementen 52b, 54b und dem Grundkörper 44b geschaffen. Es kann dadurch eine besonders vorteilhafte Kraftübertragung zwischen dem Grundkörper 44b und den Trägerelementen 52b, 54b und eine insbesondere feste und sichere Verklebung erreicht werden. In dem hinteren Bereich 144b weist der Grundkörper 44b an äußeren Seiten der Trägerelemente 52b, 54b jeweils eine Gurtanbindungsausnehmung 146b, 148b auf. In einem montierten Zustand ist ein Sicherheitsgurt des Flugzeugsitzes 10b durch die Gurtanbindungsausnehmungen 146b, 148b geführt. Über nicht näher dargestellte Gurtanbindungselemente ist der Sicherheitsgurt dabei an den hinteren Querträger 26b oder an das jeweilige Trägerelement 52b, 54b fest angebunden. Die Trägerelemente 52b, 54b sind jeweils mit dem vorderen Querträger 24b und dem hinteren Querträger 26b verbunden. Die Trägerelemente 52b, 54b sind schwenkbar zu der Aufständereinheit 14b angeordnet. Dazu sind die Trägerelemente 52b, 54b schwenkbar zu dem hinteren Querträger 26b angeordnet. Dabei sind die Trägerelemente 52b, 54b direkt auf dem hinteren Querträger 26b schwenkbar gelagert. Dazu weisen die Trägerelemente 52b, 54b jeweils eine Lageraufnahme 108b auf. Die Lageraufnahme 108b ist zur Ausbildung einer Gleitlagerstelle vorgesehen. Dabei ist es grundsätzlich denkbar, dass in der Lageraufnahme 108b zusätzlich Gleitmittel angeordnet sind. An ihren vorderen Enden sind die Trägerelemente 52b, 54b über Lagerstellen 110b beweglich zu dem vorderen Querträger 24b gelagert. Die Lagerstellen 110b weisen zwei halbkreisförmige Aufnahmen 112b, 114b auf, die beabstandet zueinander ausgebildet sind. Dabei sind die beiden Aufnahmen 112b, 114b über Abstandselemente 116b zueinander beabstandet. Die Abstandselemente 116b sind dabei als Stiftschraubenelemente mit einem Kopf ausgebildet. In einer TTL-Position liegt der vordere Querträger 24b an der oberen Aufnahme 112b an. In der Komfortstellung liegt der vordere Querträger 24b an der unteren Aufnahme 114b an. Dabei drehen sich die Trägerelemente 52b, 54b jeweils direkt um den hinteren Querträger 26b. Die Flugzeugsitzvorrichtung weist äquivalent zu dem vorhergehenden Ausführungsbeispiel ein hier allerdings nicht näher dargestelltes Verriegelungsmodul auf, mittels dessen die Sitzbodeneinheit 28b in der TTL-Position verriegelt werden kann. Die Trägerelemente 52b, 54b können durch Anpassung ihrer Höhe besonders vorteilhaft an unterschiedliche Flugzeugsitze angepasst werden. Die Ausgestaltung der Trägerelemente 52b, 54b erlaubt es, ausgehend von den in diesem Ausführungsbeispiel gezeigten, Trägerelemente mit einer wesentlich geringeren Höhe bereitzustellen, die insbesondere in Notausgangssitzen verwendet werden können, um eine niedrigere Höhe der Sitzbodeneinheit zu erreichen. Eine geringere Höhe der Sitzbodeneinheit könnte dabei durch ein aufgedicktes und abnehmbares Komfortelement ausgeglichen werden.

Der Flugzeugsitz 10b weist eine Armlehne 100b auf. Die Armlehne 100b ist auf einer ersten Seite der Sitzbodeneinheit 28b an der Rückenlehneneinheit 40b angebunden. Die Armlehne 100b weist einen Grundträger 150b auf. Der Grundträger 150b der Armlehne 100b ist einstückig mit dem Grundkörper 44b der Rückenlehneneinheit 40b ausgebildet. Die Armlehne 100b ist dabei zumindest teilweise an den Grundkörper 44b angeformt. Dabei ist der Grundträger 150b der Armlehne 100b aus einem Faserverbundwerkstoff gebildet. Dabei ist es denkbar, dass der Grundträger 150b aus einem gleichen Faserverbundwerkstoff gebildet ist wie der Grundkörper 44b. Der Grundträger 150b der Armlehne 100b und der Grundkörper 44b sind dabei zusammen in einem Laminierprozess hergestellt. Grundsätzlich wäre es auch denkbar, dass der Grundträger 150b nachträglich über eine Stoffschlussverbindung, beispielsweise durch Kleben, oder durch eine Schraubverbindung mit den Grundkörper 44b verbunden ist. Die Armlehne 100b weist ein nicht näher dargestelltes Komfortelement auf. Das Komfortelement ist mit dem Grundträger 150b der Armlehne 100b verbunden. Das Komfortelement bildet dabei eine Auflagefläche für einen Passagier aus und ist aus einem gepolsterten Material gebildet. Dabei ist das Komfortelement zerstörungsfrei trennbar mit dem Grundträger 150b verbunden. Dadurch kann das Komfortelement einfach ausgetauscht werden. Das Komfortelement ist dabei über nicht näher dargestellte Rastelemente mit dem Grundträger 150b verbunden. Grundsätzlich ist es auch denkbar, dass das Komfortelement mittels einer stoffschlüssigen Verbindung oder über andere, dem Fachmann als sinnvoll erscheinende Form- und/oder Kraftschlusselemente mit dem Grundträger 150b verbunden ist. Die Armlehne 100b ist starr und unbeweglich mit dem Grundkörper 44b verbunden. Der Flugzeugsitz 10b weist dabei lediglich die an der einen Seite an den Grundkörper 44b angeformte Armlehne 100b auf. Grundsätzlich wäre es denkbar, dass der Flugzeugsitz 10b auf der gegenüberliegenden Seite der Armlehne 100b eine weitere an den Grundkörper 44b angebrachte Armlehne aufweist.

Die weiteren Flugzeugsitze 60b, 62b der Sitzreihe 12b, die jeweils auf einer Seite des Flugzeugsitzes 10b angeordnet sind, sind im Wesentlichen gleich ausgebildet, wie der Flugzeugsitz 10b. Die weiteren Flugzeugsitze 60b, 62b weisen jeweils einen Grundkörper 152b, 154b auf, der identisch zu dem Grundkörper 44b des ersten Flugzeugsitzes 10b ausgebildet ist. Die weiteren Flugzeugsitze 60b, 62b weisen jeweils ebenfalls lediglich eine angeformte Armlehne 138b, 140b auf. Der mittlere Flugzeugsitz 10b und der äußere Flugzeugsitz 60b teilen sich dabei die von dem Flugzeugsitz 10b ausgebildete Armlehne 100b. Auf einer Ganginnenseite des gangseitigen Flugzeugsitzes 62b kann eine nicht näher dargestellte Armlehne über ein an die Aufständereinheit 14b, insbesondere die Querträger 24b, 26b, angebundenes Modul ausgebildet sein.

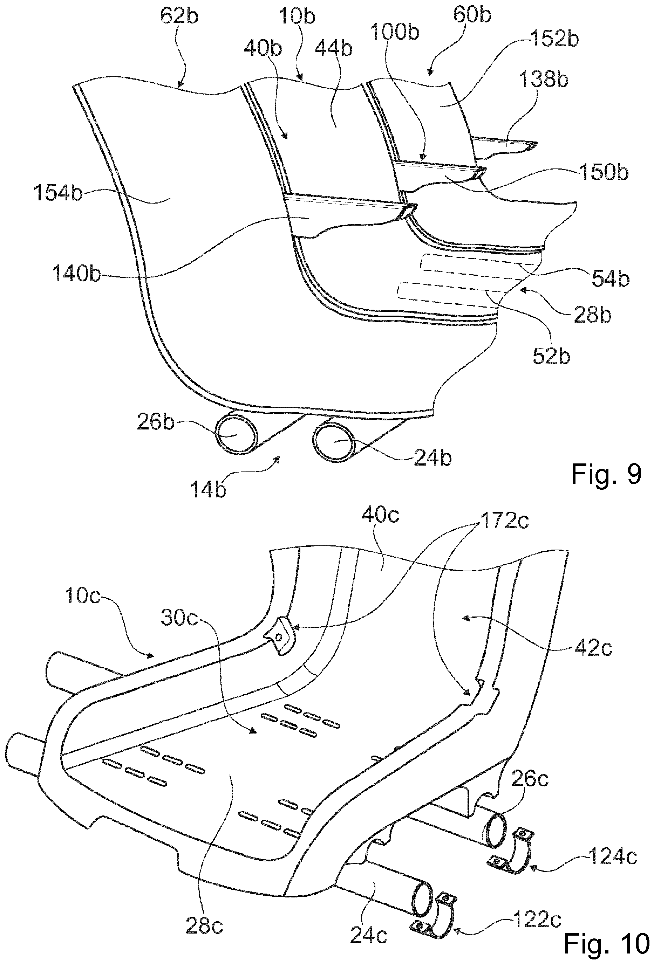

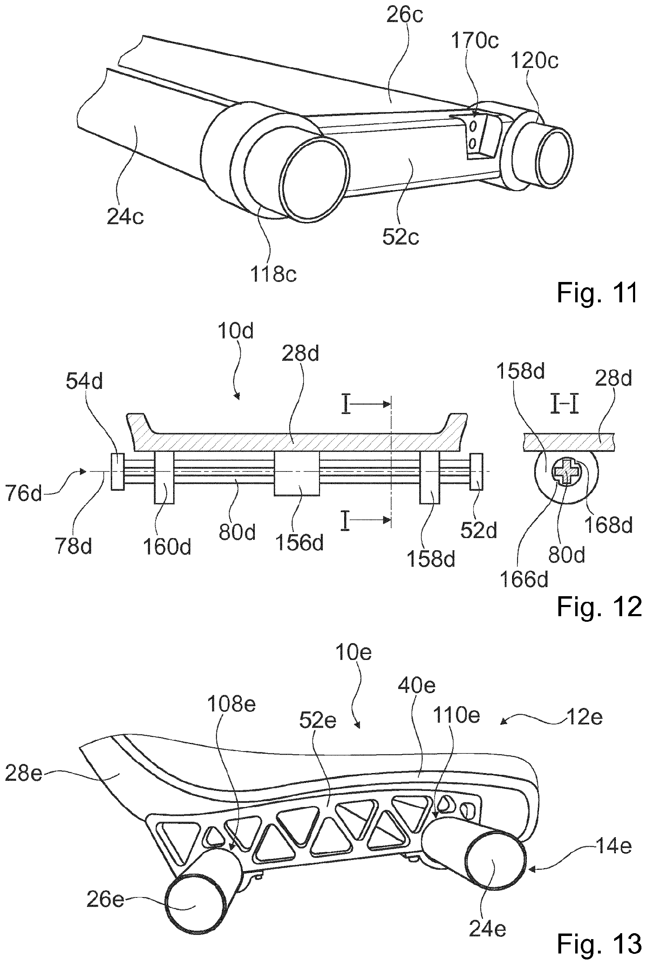

Die Figuren 10 und 11 zeigen ein drittes Ausführungsbeispiel der erfindungsgemäßen Flugzeugsitzvorrichtung. Die Flugzeugsitzvorrichtung ist Teil eines Flugzeugsitzes 10c. Der Flugzeugsitz 10c ist dazu vorgesehen, in einer Flugzeugkabine eines Flugzeugs aufgeständert zu werden. Der Flugzeugsitz 10c umfasst eine Aufständereinheit 14c. Die Aufständereinheit 14c ist dazu vorgesehen, den Flugzeugsitz 10c auf dem Kabinenboden der Flugzeugkabine aufzuständern. Die Aufständereinheit 14c weist zwei Querträger 24c, 26c auf. Die zwei Querträger 24c, 26c sind als Querrohre ausgebildet. Die Flugzeugsitzvorrichtung umfasst eine Sitzbodeneinheit 28c. Die Sitzbodeneinheit 28c ist dazu vorgesehen, eine Sitzfläche 30c für einen Passagier auszubilden. Auf der Sitzfläche 30c, die die Sitzbodeneinheit 28c ausbildet, kann ein Passagier sitzen. Die Flugzeugsitzvorrichtung umfasst eine Rückenlehneneinheit 40c. Die Rückenlehneneinheit 40c ist dazu vorgesehen, eine Rückenlehnenauflagefläche 42c bereitzustellen, an der sich ein auf dem Flugzeugsitz 10c sitzender Passagier mit seinem Rücken abstützen kann. Die Sitzbodeneinheit 28c und die Rückenlehneneinheit 40c sind im Wesentlichen gleich ausgebildet wie die Sitzbodeneinheit und die Rückenlehneneinheit aus den vorhergehenden Ausführungsbeispielen.

Die Flugzeugsitzvorrichtung weist ein Trägerelement 52c und ein zweites Trägerelement 54c auf, die dem Flugzeugsitz 10c zugeordnet sind. Die Trägerelemente 52c, 54c sind wie in dem zweiten Ausführungsbeispiel direkt und starr mit der Sitzbodeneinheit 28c des Flugzeugsitzes 10c verbunden. Im Unterschied zu dem vorhergehenden zweiten Ausführungsbeispiel sind die Trägerelemente 52c, 54c nicht schwenkbar zu der Aufständereinheit ausgebildet. Die Sitzbodeneinheit 28c ist dazu nicht zwischen einer TTL-Position und einer Komfortposition verschwenkbar. Die Trägerelemente 52c, 54c weisen zur Anbindung an den vorderen Querträger 24c ein Aufnahmeloch 118c und zur Anbindung an den hinteren Querträger 26c ein weiteres Aufnahmeloch 120c auf. Zur Fixierung der Trägerelemente 52c, 54c weist die Flugzeugsitzvorrichtung je Trägerelement 52c, 54c jeweils Schellenelemente 122c, 124c auf, über die die Trägerelemente 52c, 54c axial auf den Querträgern 24c, 26c fixiert werden. Durch die Schellenelemente 122c, 124c sind die Trägerelemente 52c, 54c auf den Querträgern 24c, 26c starr fixiert. In der Figur 10 sind mögliche Gurtanbindungspunkte 172c dargestellt, die einstückig mit der Sitzbodeneinheit 28c ausgebildet sind. An die Gurtanbindungspunkte 172c könnte ein Sicherheitsgurt des Flugzeugsitzes 10c starr angebunden werden. In der Figur 11 ist ein möglicher Gurtanbindungspunkt 170c dargestellt, der von dem Trägerelement 52c ausgebildet ist. An den Gurtanbindungspunkt 170c könnte ein Sicherheitsgurt des Flugzeugsitzes 10c starr angebunden werden.

Figur 12 zeigt ein viertes Ausführungsbeispiel der erfindungsgemäßen Flugzeugsitzvorrichtung. Die Flugzeugsitzvorrichtung ist Teil eines Flugzeugsitzes 10d. Der Flugzeugsitz 10d ist dabei im Wesentlichen gleich ausgebildet wie der entsprechende Flugzeugsitz aus dem ersten Ausführungsbeispiel, weswegen dieser hier nicht detaillierter beschrieben werden soll. Die Figur 12 stellt dabei eine stark abstrahierte Prinzipskizze dar. In der Figur 12 ist dabei zusätzlich eine Schnittansicht I-I dargestellt.

Der Flugzeugsitz 10d ist dazu vorgesehen, in einer Flugzeugkabine eines Flugzeugs aufgeständert zu werden. Der Flugzeugsitz 10d umfasst eine nicht näher dargestellte Aufständereinheit. Die Flugzeugsitzvorrichtung weist ein Trägerelement 52d und ein zweites Trägerelement 54d auf, die dem Flugzeugsitz 10d zugeordnet sind. Die Trägerelemente 52d, 54d sind starr mit der Aufständereinheit verbunden.

Der Flugzeugsitz 10c umfasst eine Sitzbodeneinheit 28d und eine nicht näher dargestellte Rückenlehneneinheit. Die Sitzbodeneinheit 28d und die Rückenlehneneinheit sind schwenbar zu dem Trägerelementen 52d, 54d angeordnet. Zur schwenkbaren Lagerung der Sitzbodeneinheit 28d und der Rückenlehneneinheit weist die Flugzeugsitzvorrichtung ein Lagermodul 76d auf. Das Lagermodul 76d ist als ein Schwenklager ausgebildet. Das Lagermodul 76d bildet eine Schwenkachse 78d aus, über die die Sitzbodeneinheit 28d und die Rückenlehneneinheit zu der Aufständereinheit verschwenkbar sind. Die Schwenkachse 78d ist dabei unterhalb der Sitzbodeneinheit 28d angeordnet. Die Schwenkachse 78d des Lagermoduls 76d ist koaxial zu einer Querrichtung der Aufständereinheit ausgerichtet.

Das Lagermodul 76d umfasst ein Torsionselement 80d. Das Torsionselement 80d ist als ein Torsionsstab ausgebildet. Das als Torsionsstab ausgebildete Torsionselement 80d bildet die Schwenkachse 78d aus. Das als Torsionsstab ausgebildete Torsionselement 80d ist dabei dazu vorgesehen, bei einer Verschwenkung der Sitzbodeneinheit 28d um die Schwenkachse 78d tordiert zu werden. Das als Torsionsstab ausgebildete Torsionselement 80d, das in der Schnittansicht I-I in einem Querschnitt gezeigt ist, weist einen kreuzförmigen Querschnitt auf. Grundsätzlich ist es auch denkbar, dass das als Torsionsstab ausgebildete Torsionselement 80d einen anderen, dem Fachmann als sinnvoll erscheinenden Querschnitt aufweist, durch den das Torsionselement 80d biegesteife und drehweiche Eigenschaften aufweist. Das Torsionselement 80d ist an seinen beiden Enden fest mit den Trägerelementen 52d, 54d verbunden. Das Torsionselement 80d ist dabei durch nicht näher dargestellte Befestigungselemente verdrehfest mit den Trägerelementen 52d, 54d verbunden. Das Torsionselement 80d ist jeweils über ein Festlager mit den Trägerelementen 52d, 54d verbunden. Das Torsionselement 80d ist mittig mit der Sitzbodeneinheit 28d verbunden. Das Torsionselement 80d ist in Querrichtung mittig mit an einer Unterseite der Sitzbodeneinheit 28d angebunden. Zur Anbindung an die Sitzbodeneinheit 28d weist das Lagermodul ein Lagerelement 156d auf. Das Lagerelement 156d ist über geeignete Befestigungselemente starr mit der Sitzbodeneinheit 28d verbunden. Grundsätzlich ist es auch denkbar, dass das Lagerelement 156d einstückig mit der Sitzbodeneinheit 28d ausgebildet oder über eine Stoffschlussverbindung an die Sitzbodeneinheit 28d angebunden ist. Das Lagerelement 156d ist als ein Festlager ausgebildet. Das Torsionselement 80d ist verdrehsicher in dem Lagerelement 156d gelagert. Das Lagermodul 76d weist zwei weitere Lagerelemente 158d, 160d auf. Die weiteren Lagerelemente 158d, 160d sind ebenfalls an der Unterseite der Sitzbodeneinheit 28d angebracht. Die Lagerelemente 158d, 160d sind über geeignete Befestigungselemente starr mit der Sitzbodeneinheit 28d verbunden. Die beiden weiteren Lagerelemente 158d, 160d sind als Loslager ausgebildet. In den als Loslagern ausgebildeten Lagerelementen 158d, 160d ist das Torsionselement 80d geführt. Dabei kann sich das Torsionselement 80d in den Lagerelementen 158d, 160d verdrehen. Die Lagerelemente 158d, 160d sind dabei jeweils an einer einem Trägerelement 52d, 54d zugewandten Seite der Sitzbodeneinheit 28d angeordnet. Das Lagermodul 76d weist vier Anschläge 166d, 168d auf. Die Anschläge 166d, 168d sind dazu vorgesehen, eine Verdrehung des Torsionselements 80d und dadurch eine Verschwenkung der Sitzbodeneinheit 28d und der Rückenlehneneinheit 40d zu begrenzen. Schlägt das Torsionselement 80d an den Anschlägen 166d, 168d an, ist der Flugzeugsitz 10d in seiner Komfortposition. Die Anschläge 166d, 168d sind in den als Loslager ausgebildeten Lagerelementen 158d, 160d angeordnet. Die Anschläge 166d, 168d sind dabei als Erhebungen auf einer Innenseite von Lagerausnehmungen in dem jeweiligen Lagerelement 158d, 160d gebildet. Grundsätzlich ist es auch denkbar, dass die Lagerelemente 158d, 160d jeweils nur einen Anschlag 166d, 168d oder mehr Anschläge 166d, 168d ausbilden.

In einer TTL-Position der Sitzbodeneinheit 28d und der Rückenlehneneinheit ist das als Torsionsstab ausgebildete Torsionselement 80d in einer Neutralstellung. In der Neutralstellung ist das Torsionselement 80d nicht tordiert. Wird die Sitzbodeneinheit 28d in eine Komfortstellung verschwenkt, wird das Torsionselement 80d über das mit das Sitzbodeneinheit 28d verbundene Lagerelement 156d mitgenommen. Da das Torsionselement 80d über Festlager drehfest mit den starr zu der Aufständereinheit angeordneten Trägerelementen 52d, 54d gelagert ist, wird das Torsionselement 80d bei einer Verschwenkung in die Komfortstellung in sich tordiert. Schlägt das Torsionselement 80d an den Anschlägen 166d, 168d des Lagermoduls 76d an, ist die Sitzbodeneinheit 28d in die Komfortposition verschwenkt. Dabei wird das Torsionselement 80d gegen eine innere Federkraft tordiert. In den Lagerelementen 158d, 160d kann das Torsionselement 80d dabei frei drehen und ist dort dadurch geführt. In der Komfortstellung ist das Torsionselement 80d elastisch tordiert. Dadurch stellt das Torsionselement 80d eine Rückstellkraft bereit, durch die die Sitzbodeneinheit 28d zurück in die TTL-Position gebracht werden kann. Zur Verriegelung der Sitzbodeneinheit 28d und der Rückenlehneneinheit weist die Flugzeugsitzvorrichtung ein nicht näher dargestelltes Verriegelungsmodul auf. Das Verriegelungsmodul ist dazu vorgesehen, die Sitzbodeneinheit 28d und die Rückenlehneneinheit in einer TTL-Position zu verriegeln. Grundsätzlich ist es auch denkbar, dass die Flugzeugsitzvorrichtung kein Verriegelungsmodul aufweist und die Sitzbodeneinheit 28d durch die Drehsteifigkeit des Torsionselements 80d ausreichend in der TTL-Position gesichert ist.

Die Figur 13 zeigt schematisch eine Flugzeugsitzvorrichtung in einem fünften Ausführungsbeispiel. Die Flugzeugsitzvorrichtung ist Teil eines Flugzeugsitzes 10e. Der Flugzeugsitz 10e ist dabei Teil einer Sitzreihe 12e aus mehreren Flugzeugsitzen 10e. Die Sitzreihe 12e weist drei nebeneinander angeordnete Flugzeugsitze 10e auf.

Der Flugzeugsitz 10e ist dazu vorgesehen, in einer Flugzeugkabine eines Flugzeugs aufgeständert zu werden. Der Flugzeugsitz 10e umfasst eine Aufständereinheit 14e. Über die Aufständereinheit 14e sind alle Flugzeugsitze 10e der Sitzreihe 12e aufgeständert. Die Aufständereinheit 14e weist zwei Querträger 24e, 26e auf. Die zwei Querträger 24e, 26e sind als Querrohre ausgebildet. Die Flugzeugsitzvorrichtung umfasst eine Sitzbodeneinheit 28e. Die Sitzbodeneinheit 28e ist dazu vorgesehen, eine Sitzfläche 30e für einen Passagier auszubilden. Die Flugzeugsitzvorrichtung umfasst eine Rückenlehneneinheit 40e. Der Flugzeugsitz 10e und insbesondere die Sitzbodeneinheit 28e und die Rückenlehneneinheit 40e sind identisch zu dem zweiten Ausführungsbeispiel der Figuren 7 bis 9 ausgebildet. Dabei sind die hier nicht näher dargestellten Flugzeugsitze der Sitzreihe 12e ebenfalls identisch zu dem zweiten Ausführungsbeispiel ausgebildet.

Im Unterschied zu dem zweiten Ausführungsbeispiel sind die Flugzeugsitze 10e der Sitzreihe 12e starr und nicht verschwenkbar mit der Aufständereinheit 14e verbunden. Die Flugzeugsitze 10e können lediglich eine Sitzposition darstellen. Die Flugzeugsitze 10e der Sitzreihe sind immer in einer TTL-Position ausgerichtet. Zur Anbindung an die Aufständereinheit 14e weist die Flugzeugsitzvorrichtung ein erstes Trägerelement 52e und ein zweites, nicht näher dargestelltes Trägerelement auf, die dem Flugzeugsitz 10e zugeordnet sind. Die beiden Trägerelemente 52e sind dazu vorgesehen, die Sitzbodeneinheit 28e und die Rückenlehneneinheit 40e mit der Aufständereinheit 14e zu koppeln. Dabei sind die Trägerelemente 52e starr mit der Aufständereinheit 14e gekoppelt.

Die Trägerelemente 52e sind jeweils mit dem vorderen Querträger 24e und dem hinteren Querträger 26e verbunden. Die Trägerelemente 52e sind direkt auf dem hinteren Querträger 26e gelagert. Dazu weisen die Trägerelemente 52e jeweils eine Lageraufnahme 108e auf. Die Lageraufnahme 108e ist zur Ausbildung eines Festlagers vorgesehen. An ihren vorderen Enden sind die Trägerelemente 52e über Lagerstellen 110e starr zu dem vorderen Querträger 24e gelagert. Die Lageraufnahmen 110e sind zur Ausbildung eines Festlagers vorgesehen. Durch die Lageraufnahmen 108e, 110e sind die Trägerelemente 52e starr und unbeweglich mit den Querträgern 24e, 26e verbunden. Dabei sind die Trägerelemente 52e über die Lageraufnahmen 108e, 110e axial auf den Querträgern 24e, 26e fixiert.

### Bezugszeichen

- 10: Flugzeugsitz
- 12: Sitzreihe
- 14: Aufständereinheit
- 16: Sitzfuß
- 18: Sitzfuß
- 20: Sitzfuß
- 22: Sitzfuß
- 24: Querträger
- 26: Querträger
- 28: Sitzbodeneinheit
- 30: Sitzfläche
- 32: Grundkörper
- 34: Rückwand
- 36: Frontwand
- 38: Komfortelement
- 40: Rückenlehneneinheit
- 42: Rückenlehnenauflagefläche
- 44: Grundkörper
- 46: Rückwand
- 48: Frontwand
- 50: Komfortelement
- 52: Trägerelement
- 54: Trägerelement
- 56: Trägerelement
- 58: Trägerelement
- 60: Flugzeugsitz
- 62: Flugzeugsitz
- 64: Anbindungsbereich
- 66: Anbindungsbereich
- 68: Oberkante
- 70: Endbereich
- 72: Aufnahmeloch
- 74: Oberkante
- 76: Lagermodul
- 78: Schwenkachse
- 80: Torsionselement
- 82: Lageraufnahme
- 84: Anbindungselement
- 86: Verriegelungsmodul
- 88: Verriegelungselement
- 90: Verriegelungseinheit
- 92: Gehäuse
- 94: Formschlusselement
- 96: Betätigungshebel
- 98: Betätigungselement
- 100: Armlehne
- 102: Armlehne
- 104: Gurtanbindungselement
- 106: Gurtanbindungselement
- 108: Lageraufnahme
- 110: Lagerstelle
- 112: Aufnahme
- 114: Aufnahme
- 116: Abstandselement
- 118: Aufnahmeloch
- 120: Aufnahmeloch
- 122: Schellenelement
- 124: Schellenelement
- 130: vorderer Bereich
- 132: Bedienelement
- 134: Rückenlehneneinheit
- 136: Rückenlehneneinheit
- 138: Armlehne
- 140: Armlehne
- 142: Vorsprung
- 144: Bereich
- 146: Gurtanbindungsausnehmung
- 148: Gurtanbindungsausnehmung
- 150: Grundträger
- 152: Grundkörper
- 154: Grundkörper
- 156: Lagerelement
- 158: Lagerelement
- 160: Lagerelement
- 162: Position
- 164: Trittelement
- 166: Anschlag
- 168: Anschlag
- 170: Gurtanbindungspunkt
- 172: Gurtanbindungspunkt

## Patentansprüche

1. Flugzeugsitz mit einer Armlehne (100a, 102a; 100b) und mit einer Flugzeugsitzvorrichtung, welche zumindest eine Sitzbodeneinheit (28a; 28b; 28c; 28d; 28e), die zumindest teilweise eine Sitzfläche (30a; 30b; 30c) ausbildet, eine Rückenlehneneinheit (40a; 40b; 40c; 40d; 40e), eine Aufständereinheit (14a; 14b; 14c; 14e), die dazu vorgesehen ist, auf einer Aufständerebene aufgeständert zu werden, wobei die Sitzbodeneinheit (28a; 28b; 28d) dazu vorgesehen ist, schwenkbar mit der Aufständereinheit (14a; 14b; 14d) verbunden zu sein, und zumindest ein Trägerelement (52a, 54a, 56a, 58a; 52b, 54b; 52c, 54c; 52d, 54d; 52e) umfasst, welches sich zumindest über einen Großteil einer Sitztiefe der Sitzfläche (30a; 30b; 30c) erstreckt und dazu vorgesehen ist, die Sitzbodeneinheit (28a; 28b; 28c; 28d; 28e) mit der Aufständereinheit (14a; 14b; 14c; 14e) zu koppeln, wobei das wenigstens eine Trägerelement (52a, 54a, 56a, 58a; 52b, 54b; 52c, 54c; 52d, 54d; 52e) in wenigstens einer Sitzposition zumindest im Wesentlichen unterhalb einer Oberkante (74a) der Sitzbodeneinheit (28a; 28b; 28c) angeordnet ist, **dadurch gekennzeichnet, dass** die Armlehne (100a, 102a; 100b) direkt mit der Rückenlehneneinheit (40a; 40b; 40c; 40d; 40e) verbunden ist.

2. Flugzeugsitz nach Anspruch 1, **dadurch gekennzeichnet, dass** die Flugzeugsitzvorrichtung wenigstens ein Lagermodul (76a; 76b) umfasst, das dazu vorgesehen ist, die Sitzbodeneinheit (28a; 28b) zu den Trägerelementen (52a, 54a, 56a, 58a; 52b, 54b) zu verschwenken und dazu eine Schwenkachse (78a) ausbildet, die unterhalb der Sitzbodeneinheit (28a; 28b) angeordnet ist.

3. Flugzeugsitz nach Anspruch 1 oder 2, **dadurch gekennzeichnet, dass** die Rückenlehneneinheit (40a; 40b; 40c; 40e) zumindest teilweise einstückig mit der Sitzbodeneinheit (28a; 28b; 28c; 28e) ausgebildet ist.

4. Flugzeugsitz nach einem der vorhergehenden Ansprüche, **dadurch gekennzeichnet, dass** die Rückenlehneneinheit (40a; 40b) dazu vorgesehen ist, schwenkbar mit der Aufständereinheit (14a; 14b; 14d) verbunden zu sein.

5. Flugzeugsitz nach Anspruch 4, **dadurch gekennzeichnet, dass** die Sitzbodeneinheit (28a; 28b; 28d) und die Rückenlehneneinheit (40a; 40b) um einen gemeinsamen Drehpunkt gelagert sind.

6. Flugzeugsitz nach Anspruch 2, **dadurch gekennzeichnet, dass** das wenigstens eine Lagermodul (76a; 76b) dazu vorgesehen ist, die Rückenlehneneinheit (40a; 40b) zu den Trägerelementen (52a, 54a, 56a, 58a; 52b, 54b) zu verschwenken.

7. Flugzeugsitz nach Anspruch 2 oder 6, **dadurch gekennzeichnet, dass** das Lagermodul (76a; 76d) zumindest ein Torsionselement (80a; 80d) aufweist, das die Schwenkachse (78a; 78d) des Flugzeugsitzes (10a; 10d) ausbildet und sich über eine Sitzbreite der Sitzbodeneinheit (28a; 28d) erstreckt.

8. Flugzeugsitz nach einem der vorhergehenden Ansprüche, **dadurch gekennzeichnet, dass** die Flugzeugsitzvorrichtung zumindest ein Verriegelungsmodul (86a) umfasst, welches zumindest in einer Sitzstellung dazu vorgesehen ist, die Sitzbodeneinheit (28a) und/oder Rückenlehneneinheit (40a) zu verriegeln.

9. Flugzeugsitz nach Anspruch 8, **dadurch gekennzeichnet, dass** das Verriegelungsmodul (86a) wenigstens ein Verriegelungselement (88a) aufweist, das die Sitzbodeneinheit (28a) lediglich in einer als TTL-Position ausgebildeten Sitzstellung verriegelt.

10. Flugzeugsitz nach Anspruch 1 oder 3, **dadurch gekennzeichnet, dass** das Lagermodul (76c) das wenigstens eine Trägerelement (52c, 54c) direkt mit einem hinteren Querträger (26c) schwenkbar koppelt.

## Claims

1. Aircraft seat with an armrest (100a, 102a; 100b) and with an aircraft seat device comprising at least one seat bottom unit (28a; 28b; 28c; 28d; 28e) which at least partly forms a sitting surface (30a; 30b; 30c), a backrest unit (40a; 40b; 40c; 40d; 40e), a mounting unit (14a; 14b; 14c; 14e) which is configured to be mounted on a mounting plane,
the seat bottom unit (28a; 28b; 28d) being configured to be pivotally connected with the mounting unit (14a; 14b; 14d), and having at least one support element (52a, 54a, 56a, 58a; 52b, 54b; 52c, 54c; 52d, 54d; 52e) which extends at least over a large portion of a sitting depth of the sitting surface (30a; 30b; 30c) and which is configured to couple the seat bottom unit (28a; 28b; 28c; 28d; 28e) with the mounting unit (28a; 28b; 28c; 28e),
wherein in at least one sitting position the at least one support element (52a, 54a, 56a, 58a; 52b, 54b; 52c, 54c; 52d, 54d; 52e) is arranged at least substantially underneath an upper edge (74a) of the seat bottom unit (28a; 28b; 28c),
**characterised in that** the armrest (100a, 102a; 100b) is directly connected with the backrest unit (40a; 40b; 40c; 40d; 40e).

2. Aircraft seat according to claim 1,
**characterised in that** the aircraft seat device comprises at least one support module (76a; 76b) that is configured to pivot the seat bottom unit (28a; 28b) relative to the support elements (52a, 54a, 56a, 58a; 52b, 54b) and for this purpose forms a pivot axle (78a) which is arranged underneath the seat bottom unit (28a; 28b).

3. Aircraft seat according to claim 1 or 2,
**characterised in that** the backrest unit (40a; 40b; 40c; 40e) is at least partly realized integrally with the seat bottom unit (28a; 28b; 28c; 28e).

4. Aircraft seat according to one of the preceding claims,
**characterised in that** the backrest unit (40a; 40b) is configured to be pivotally connected with the mounting unit (14a; 14b; 14d).

5. Aircraft seat according to claim 4,
**characterised in that** the seat bottom unit (28a; 28b; 28d) and the backrest unit (40a; 40b) are supported around a common pivot point.

6. Aircraft seat according to claim 2,
**characterised in that** the at least one support module (76a; 76b) is configured to pivot the backrest unit (40a; 40b) relative to the support elements (52a, 54a, 56a, 58a; 52b, 54b).

7. Aircraft seat according to claim 2 or 6,
**characterised in that** the support module (76a; 76d) comprises at least one torsion element (80a; 80d), which forms the pivot axle (78a; 78d) of the aircraft seat (10a; 10d) and which extends over a seat width of the seat bottom unit (28a; 28d).

8. Aircraft seat according to one of the preceding claims,
**characterised in that** the aircraft seat device comprises at least one locking module (86a), which is at least in a sitting position configured for locking the seat bottom unit (28a) and/or the backrest unit (40a).

9. Aircraft seat according to claim 8,
**characterised in that** the locking module (86a) comprises at least one locking element (88a) which locks the seat bottom unit (28a) only in one sitting position that is realized as a TTL position.

10. Aircraft seat according to claim 1 or 3,
**characterised in that** the support module (76c) couples the at least one support element (52c, 54c) directly with a rear crossbeam (26c).

## Revendications

1. Siège d'avion avec un appuie-bras (100a, 102a ; 100b) et avec un dispositif de siège d'avion comprenant au moins une unité fond de siège (28a ; 28b ; 28c ; 28d ; 28^{e}) qui forme au moins partiellement une surface d'assise (30a ; 30b ; 30c), une unité dossier (40a ; 40b ; 40c ; 40d ; 40e), une unité de montage (14a ; 14b ; 14c ; 14e) qui est prévue pour être élevée sur un plan de montage,
l'unité fond de siège (28a ; 28b ; 28d) étant prévue pour être reliée de façon pivotante avec l'unité de montage (14a ; 14b ; 14d) et comprenant au moins un élément porteur (52a, 54a, 56a, 58a ; 52b, 54b ; 52c, 54c ; 52d, 54d ; 52e) qui s'étant au moins à travers une large partie d'une profondeur d'assise de la surface d'assise (30a ; 30b ; 30c) et qui est prévu pour coupler l'unité fond de siège (28a ; 28b ; 28c ; 28d ; 28e) avec l'unité de montage (14a ; 14b ; 14c ; 14e),
où dans au moins une position de siège l'au moins un élément porteur (52a, 54a, 56a, 58a ; 52b, 54b ; 52c, 54c ; 52d, 54d ; 52e) est disposé au moins sensiblement au-dessous d'un bord supérieur (74a) de l'unité fond de siège (28a ; 28b ; 28c), **caractérisé en ce que** l'appuie-bras (100a, 102a ; 100b) est directement relié à l'unité dossier (40a ; 40b ; 40c ; 40d ; 40e).

2. Siège d'avion selon la revendication 1,
**caractérisé en ce que** le dispositif de siège d'avion comporte au moins un module à support (76a ; 76b) qui est prévu pour pivoter l'unité fond de siège (28a ; 28b) par rapport aux éléments porteurs (52a, 54a, 56a, 58a ; 52b, 54b), le module à support (76a ; 76b) formant à cette fin un arbre pivotant (78a) qui est disposé au-dessous de l'unité fond de siège (28a ; 28b).

3. Siège d'avion selon la revendication 1 ou 2,
**caractérisé en ce que** l'unité dossier (40a ; 40b ; 40c ; 40e) est au moins partiellement réalisée intégralement avec l'unité fond de siège (28a ; 28b ; 28c ; 28e).

4. Siège d'avion selon l'une des revendications précédentes,
**caractérisé en ce que** l'unité dossier (40a ; 40b) est prévue pour être reliée avec l'unité de montage (14a ; 14b ; 14d) de façon pivotante.

5. Siège d'avion selon la revendication 4,
**caractérisé en ce que** l'unité fond de siège (28a ; 28b ; 28d) et l'unité dossier (40a ; 40b) sont supportées autour d'un centre pivot commun.

6. Siège d'avion selon la revendication 2,
**caractérisé en ce que** l'au moins un module à support (76a ; 76b) est prévu pour pivoter l'unité dossier (40a ; 40b) par rapport aux éléments porteurs (52a, 54a, 56a, 58a ; 52b, 54b).

7. Siège d'avion selon la revendication 2 ou 6,
**caractérisé en ce que** le module porteur (76a ; 76d) comporte au moins un élément de torsion (80a ; 80d) qui forme l'arbre pivotant (78a ; 78d) du siège d'avion (10a ; 10d) et qui s'étend à travers une largeur de siège de l'unité fond de siège (28a ; 28d).

8. Siège d'avion selon l'une des revendications précédentes,
**caractérisé en ce que** le dispositif de siège d'avion comprend au moins un module à verrouillage (86a) qui est prévu, au moins dans une position assise, pour verrouiller l'unité fond de siège (28a) et/ou l'unité dossier (40a).

9. Siège d'avion selon la revendication 8,
**caractérisé en ce que** le module de verrouillage (86a) comprend au moins un élément de verrouillage (88a) verrouillant l'unité fond de siège (28a) seulement dans une position assise réalisée comme position TTL.

10. Siège d'avion selon la revendication 1 ou 3,
**caractérisé en ce que** le module à support (76c) couple l'au moins un élément porteur (52c, 54c) directement avec un profilé transversal arrière (26c) de façon pivotante.
